# EUROPEAN PATENT APPLICATION

(11) **EP 4 793 625 A2**
(43) Date of publication of application: **19.08.2026**
(21) Application number: 26153347.5
(22) Date of filing: 22.01.2026
(51) Int. Cl.: G01N 15/14, G01N 15/1429, G01N 15/10

(54) **GAIN-INDEPENDENT FLOW CYTOMETRY DATA**

(30) Priority: 24.01.2025 US 202563749034 P
(71) Applicant: Becton, Dickinson and Company, Franklin Lakes, NJ 07417 (US)
(72) Inventor: Mage, Peter Ludington, San Jose, California (US); Bai, Wenyu, San Jose, California (US); Welsh, Joshua Aden, Walnut Creek, California (US)
(74) Representative: dompatent

(57) **Abstract**

Systems and methods for providing gain-independent flow cytometry data are disclosed. In some implementations, sample median fluorescence intensities (MFIs) may be maintained irrespective of the gain detector settings. In some such implementations, the numerical scale used to represent MFI may correspond to the true intensity of the input signal. As a result, quality control (QC) procedures may instead focus on maintaining resolution performance of the flow cytometer. For example, the QC procedures may instead focus on maximizing a signal-to-noise ratio (SNR) for one or more photodetectors. In some such implementations, the frequency with which such QC procedures are performed may be reduced (e.g., from a daily procedure to a weekly or even monthly procedure). In some such implementations, it may be unnecessary to perform repeated QC procedures to ensure consistent sample MFIs over time.

## Description

### CROSS-REFERENCE TO RELATED APPLICATIONS

The present application claims priority to and the benefit of US Provisional Application No. 63/749,034 which was filed on January 24, 2025 and is incorporated by reference herein.

### TECHNICAL FIELD

The present technology relates to systems and methods for providing gain-independent flow cytometry data.

### BACKGROUND

The characterization of analytes in biological fluids has become an important part of biological research, medical diagnoses and assessments of overall health and wellness of a patient. Detecting analytes in biological fluids, such as human blood or blood derived products, may provide results that may play a role in determining a treatment protocol of a patient having a variety of disease conditions.

Flow cytometry is a technique used to characterize and optionally sort biological material, such as cells of a blood sample or particles of interest in another type of biological or chemical sample. A flow cytometer typically includes a sample reservoir for receiving a fluid sample, such as a blood sample, and a sheath reservoir containing a sheath fluid. The flow cytometer transports the particles (*e.g.,* cells) in the biological sample as a flow stream to a flow cell, while also directing the sheath fluid to the flow cell. To characterize the components of the flow stream, the flow stream is irradiated with light. Variations in the materials in the flow stream, such as morphologies or the presence of fluorescent labels, may cause variations in the observed light and these variations may allow for characterization and separation. To characterize the components in the flow stream, light may impinge on the flow stream and be collected. Light sources in flow cytometers may vary and may include one or more broad spectrum lamps, light emitting diodes, or lasers. The light source is aligned with the flow stream and an optical response from the illuminated particles is collected and quantified.

A flow cytometer includes a photo-detection system made up of optical adjustment components, detectors, and electronics for detecting optical signals and converting those signals to corresponding electric signals. The electronic signals are processed to obtain parameters that a user may utilize to perform a desired analysis. A flow cytometer may include different types of photodetectors to detect signals. When an optical signal (*e.g.,* emerging from the sample being analyzed in the flow cytometer) is incident on the photodetectors, an electrical signal is produced at its output, which is proportional to the incident optical signal. The gain of a photodetector may be determined from a ratio of the output signal to the input signal. The gain of a photodetector may be used to control the operating range of detection by the photodetector, such as to ensure that sample fluorescence shows up in the operating range of the photodetector with a high degree of confidence and/or to enhance the resolution between positive and negative signals to facilitate the differentiation of such signals. Typically, the gain of a photodetector is positively correlated to voltage such that the gain of the photodetector may be controlled by modulating the voltage applied to the photodetector. However, this correlation is complicated by numerous parameters including the type of the photodetector, wavelength of incident light, and temperature.

The parameters measured using a flow cytometer typically include light at the excitation wavelength scattered by the particle in a narrow angle along a mostly forward direction, which may be referred to as forward-scatter (FSC), the excitation light that is scattered by the particle in an orthogonal direction to the excitation laser, which may be referred to as side-scatter (SSC), and the light emitted from fluorescent molecules in one or more detectors that measure signal over a range of spectral wavelengths, or by the fluorescent dye that is primarily detected in that specific detector or array of detectors. Different cell types may be identified by their light scatter characteristics and fluorescence emissions resulting from labeling various cell proteins or other constituents with fluorescent dye-labeled antibodies or other fluorescent probes.

Flow cytometers may further include a memory for recording the measured data and one or more processors for analyzing the data. For example, data storage and analysis may be carried out using a computer connected to the detection electronics. In some cases, the data may be stored in tabular form, where each row corresponds to data for one particle, and the columns correspond to each of the measured features. The use of standard file formats, such as an "FCS" file format, for storing data from a particle analyzer may facilitate analyzing data using separate programs and/or machines. The data may be displayed in 1-dimensional histograms and/or 2-dimensional (2D) plots for ease of visualization.

A frequent goal of flow cytometric analysis is to classify different populations of flow cytometer data as being associated with one or more different parameters. This classification is impacted by how well different populations of flow cytometer data are separated. The degree of separation between two populations is determined by their mean or median difference as well as their intrapopulation variance (spread). While mean differences between populations of flow cytometer data received from a stained sample are already defined, users may adjust the gain of each detector to increase the resolution of the populations and/or reduce the spread of the populations, thereby achieving better separation among different populations.

Existing flow cytometers provide scaled, measured photodetector data in arbitrary units. The location of a given input optical signal on this arbitrary unit scale may be increased or decreased by adjusting (*e.g.,* increasing or decreasing) the gain of one or more photodetectors. The ability of flow cytometers to perform consistently from day-to-day (*e.g.,* produce approximately the same output signal for the same input sample over time) depends on a number of factors, such as temperature and optomechanical alignment, which can vary randomly over time. To preserve performance, manufacturers have developed daily quality control (QC) procedures for adjusting the gain of the photodetectors of a flow cytometer. These procedures often involve using target measured signal values for a reference input light source, such as a QC bead (*e.g.,* a broad-spectrum fluorescent bead). After measuring the median fluorescence intensity (MFI) of the QC bead across different voltages (*e.g.,* through a voltage titration procedure), a resolution adjustment factor is calculated to maintain the MFI at the target value for a particular detector channel associated with one or more photodetectors. This adjustment factor is then applied to the gain of the one or more photodetectors to maintain consistency of the MFI.

Standardizing photodetector data in this way, however, requires that users do not manually change their detector settings and can result in detector gain settings that compromise resolution in order to maintain consistent MFIs. In other words, users can optimize their detector settings or they can adjust their detector settings to ensure consistent sample MFIs over time, but they cannot achieve both at the same time.

### BRIEF SUMMARY

Systems and methods for providing gain-independent flow cytometry data are disclosed. In some implementations, sample median fluorescence intensities (MFIs) may be maintained irrespective of the gain detector settings. In some such implementations, the numerical scale used to represent MFI may correspond to the true intensity of the input signal. As a result, quality control (QC) procedures may instead focus on maintaining resolution performance of the flow cytometer. For example, the QC procedures may instead focus on maximizing a signal-to-noise ratio (SNR) for one or more photodetectors. In some such implementations, the frequency with which such QC procedures are performed may be reduced (*e.g*., from a daily procedure to a weekly or even monthly procedure). In some such implementations, it may be unnecessary to perform repeated QC procedures to ensure consistent sample MFIs over time.

One aspect of the present disclosure relates to a system comprising a detector, a memory, and one or more processors. The detector may be configured to measure, in a raw space, particle-modulated light emitted by a particle of a flow stream. The memory may store (a) a lookup table that associates each one of a plurality of user-selectable parameters for adjusting a gain of the detector with a respective one of a plurality of linear gains or (b) a predetermined function that associates a provided user-selectable parameter for adjusting the gain of the detector with a corresponding linear gain. The one or more processors may be configured to: (a) receive a raw measurement of the particle-modulated light from the detector, (b) obtain a user-selected parameter for adjusting the gain of the detector, (c) obtain a linear gain associated with the obtained user-selected parameter by accessing the lookup table or using the predetermined function, and (d) convert the raw measurement into a gain-independent value by dividing the raw measurement by the obtained linear gain.

In some implementations, the memory stores the lookup table, and the linear gain associated with the obtained user-selected parameter is obtained by accessing the lookup table. In some implementations, the memory stores the predetermined function, and the linear gain associated with the obtained user-selected parameter is obtained by using the predetermined function. In some implementations, the user-selectable parameters are voltages that when applied to the detector adjust the gain of the detector.

In some implementations, the one or more processors are further configured to (a) apply a scaling factor to the gain-independent value to obtain a scaled, gain-independent value and (b) unmix the scaled, gain-independent value to obtain a scaled, unmixed value. In some implementations, the one or more processors are further configured to (a) unmix the gain-independent value to obtain an unmixed value and (b) apply a scaling factor to the unmixed value to obtain a scaled, unmixed value. In some implementations, the one or more processors are further configured to obtain a target gain for the detector, and the scaling factor is based on the obtained target gain. In some implementations, the scaling factor accounts for a drift in sensitivity of the detector over time, a fluorophore characteristic of the particle, or a labelling property of the particle.

In some implementations, the one or more processors are further configured to calculate an optimized gain for the detector. In some such implementations, a signal-to-noise ratio (SNR) of the detector is optimized by the optimized gain, and the one or more processors are further configured to change the gain of the detector to the optimized gain. In some implementations, the one or more processors are further configured to: (a) incrementally increase the gain of the detector such that the detector collects light from the flow stream at each of a plurality of successively increasing gains, (b) obtain a baseline noise level from the detector at each gain in the plurality of successively increasing gains, (c) calculate a limit of detection (LoD) for each gain in the plurality of successively increasing gains, and (d) determine an optimized gain based on the calculated LoDs.

In some implementations, the one or more processors are further configured to sort a plurality of particles based on a threshold defined using the gain-independent value. In some implementations, the one or more processors are further configured to generate, for display, a graphical user interface comprising a plot with the gain-independent value. In some implementations, the graphical user interface further comprises a graphical element for enabling or disabling the conversion of raw measurements received from the detector into gain-independent values. In some implementations, the graphical user interface further comprises a graphical element for adjusting the gain of the detector.

Another aspect of the present disclosure relates to a method comprising: (a) receiving, with one or more processors, from a detector, a raw measurement of particle-modulated light emitted by a particle of a flow stream, (b) obtaining, with the one or more processors, a user-selected parameter for adjusting a gain of the detector, (c) obtaining, with the one or more processors, a linear gain associated with the obtained user-selected parameter by accessing a lookup table or using a predetermined function, wherein the lookup table associates each one of a plurality of user-selectable parameters for adjusting the gain of the detector with a respective one of a plurality of linear gains, and wherein the predetermined function associates a provided user-selectable parameter for adjusting the gain of the detector with a corresponding linear gain, and (d) converting, with the one or more processors, the raw measurement into a gain-independent value by dividing the raw measurement by the obtained linear gain.

Yet another aspect of the present disclosure relates to a non-transitory computer readable storage medium having instructions stored thereon that, when executed by one or more processors, cause the one or more processors to: (a) receive, from a detector, a raw measurement of particle-modulated light emitted by a particle of a flow stream, (b) obtain a user-selected parameter for adjusting a gain of the detector, (c) obtain a linear gain associated with the obtained user-selected parameter by accessing a lookup table or using a predetermined function, wherein the lookup table associates each one of a plurality of user-selectable parameters for adjusting the gain of the detector with a respective one of a plurality of linear gains, and wherein the predetermined function associates a provided user-selectable parameter for adjusting the gain of the detector with a corresponding linear gain, and (d) convert the raw measurement into a gain-independent value by dividing the raw measurement by the obtained linear gain.

Yet another aspect of the present disclosure relates to a method comprising: (a) obtaining, with one or more processors, an unmixed measurement of particle-modulated light emitted by a particle of a flow stream, (b) obtaining, with the one or more processors, an original user-selected parameter for adjusting a gain of a detector, (c) obtaining, with the one or more processors, an updated user-selected parameter for adjusting the gain of the detector, (d) deriving, with the one or more processors, a scaling factor based on a ratio of the updated user-selected parameter and the original user-selected parameter, and (e) applying, with the one or more processors, the scaling factor to the unmixed measurement to obtain a gain-independent value. In some implementations, the method further comprises applying, with the one or more processors, a rescaling factor to the gain-independent value to obtain a renormalized, gain-independent value.

Yet another aspect of the present disclosure relates to a non-transitory computer readable storage medium having instructions stored thereon that, when executed by one or more processors, cause the one or more processors to: (a) obtain an unmixed measurement of particle-modulated light emitted by a particle of a flow stream, (b) obtain an original user-selected parameter for adjusting a gain of a detector, (c) obtain an updated user-selected parameter for adjusting the gain of the detector, (d) derive a scaling factor based on a ratio of the updated user-selected parameter and the original user-selected parameter, and (e) apply the scaling factor to the unmixed measurement to obtain a gain-independent value.

### BRIEF DESCRIPTION OF DRAWINGS

FIG. 1 illustrates a functional block diagram of a system for analyzing and displaying biological events.
FIG. 2A illustrates a particle sorter system.
FIG. 2B illustrates an implementation of the particle sorter system of FIG. 2A that includes deflection plates.
FIG. 3 illustrates a functional block diagram of a particle analysis system.
FIG. 4 illustrates a system for flow cytometry.
FIG. 5A illustrates a radio frequency tagged emission (FIRE) particle sorter system.
FIG. 5B illustrates image-enabled particle sorting data processing.
FIG. 6A illustrates a graph that visually represents aspects of a gain calibration process of a data normalization method.
FIG. 6B illustrates a graph that visually represents aspects of a resolution adjustment process of a data normalization method.
FIG. 6C illustrates a graph that visually represents aspects of a gain normalization process of a data normalization method.
FIG. 7A illustrates a plot demonstrating the effect of a user changing the gain when the corresponding measurements are gain-dependent values.
FIG. 7B illustrates a plot demonstrating the effect of a user changing the gain when the corresponding measurements are scaled, gain-independent values.
FIG. 8A illustrates a method for operating a flow cytometer.
FIG. 8B illustrates a method for operating a flow cytometer.
FIG. 8C illustrates a method for operating a flow cytometer.
FIG. 9 illustrates a flow diagram for operations of a flow cytometer.
FIG. 10 is a block diagram of a particle analysis and/or sorting system.
FIG. 11A illustrates a graphical user interface of a flow cytometer in which an option to display gain-dependent data has been selected.
FIG. 11B illustrates the graphical user interface of FIG. 11A when an option to display scaled, gain-independent data has been selected.
FIG. 11C illustrates a plot in the graphical user interface of FIG. 11A.
FIG. 11D illustrates a plot in the graphical user interface of FIG. 11B.

### DETAILED DESCRIPTION

Implementations of the present disclosure are described in detail with reference to the drawing figures wherein like reference numerals identify similar or identical elements. It is to be understood that the disclosed implementations are merely examples of the disclosure, which may be embodied in various forms. Well-known functions or constructions are not described in detail to avoid obscuring the present disclosure in unnecessary detail. Therefore, specific structural and functional details disclosed herein are not to be interpreted as limiting, but merely as a basis for the claims and as a representative basis for teaching one skilled in the art to variously employ the present disclosure in virtually any appropriately detailed structure.

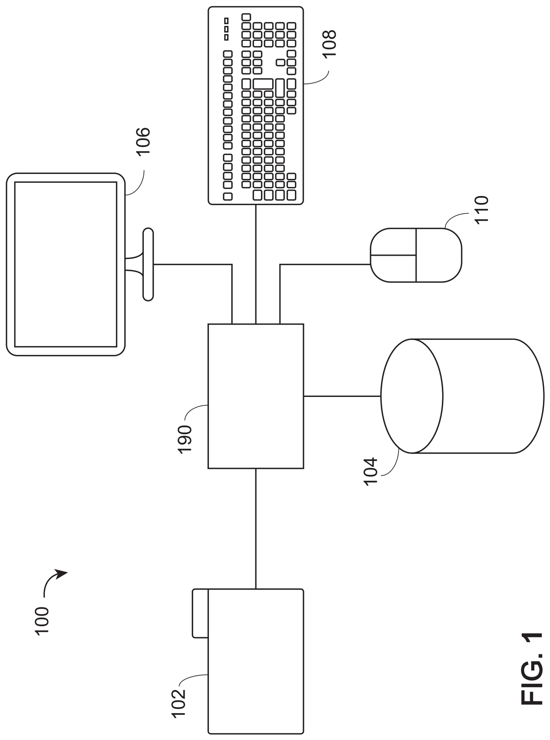

FIG. 1 illustrates a functional block diagram of a system 100 for analyzing and displaying biological events. As shown, system 100 includes biological instrument 102, storage device 104, display device 106, keyboard 108, mouse 110, and controller 190. In some implementations, at least some of these components may communicate with one another through a wired connection using standard communications protocols, such as Inter-Integrated Circuit (I²C), Serial Peripheral Interface (SPI), Controller Area Network (CAN), Universal Asynchronous Reception and Transmission (UART), Ethernet, or Universal Serial Bus (USB), or custom communications protocols. In some implementations, at least some of these components may communicate wirelessly with one another using standard communications protocols, such as Bluetooth, WiFi, ZigBee, Z Wave, NEC Infrared (IR), Code Division Multiple Access (CDMA), Global System for Mobile Communications (GSM), or Long-Term Evolution (LTE), or custom communications protocols.

Biological instrument 102 may be configured to acquire biological event data. For example, in some implementations, biological instrument 102 may be a flow cytometer configured to acquire flow cytometric event data. Suitable flow cytometry systems may include, for example, flow cytometers manufactured by Becton, Dickinson and Company (Franklin Lakes, NJ), such as the BD FACSCanto^{™} flow cytometer, the BD FACSCanto^{™} II flow cytometer, the BD Accuri^{™} flow cytometer, the BD Accuri^{™} C6 Plus flow cytometer, the BD FACSCelesta^{™} flow cytometer, the BD FACSLyric^{™} flow cytometer, the BD FACSVerse^{™} flow cytometer, the BD FACSymphony^{™} flow cytometer, the BD LSRFortessa^{™} flow cytometer, the BD LSRFortessa^{™} X-20 flow cytometer, the BD FACSPresto^{™} flow cytometer, the BD FACSVia^{™} flow cytometer, the BD FACSCalibur^{™} cell sorter, the BD FACSCount^{™} cell sorter, the BD FACSLyric^{™} cell sorter, the BD Via^{™} cell sorter, the BD Influx^{™} cell sorter, the BD Jazz^{™} cell sorter, the BD Aria^{™} cell sorter, the BD FACSAria^{™} II cell sorter, the BD FACSAria^{™} III cell sorter, the BD FACSAria^{™} Fusion cell sorter, the BD FACSMelody^{™} cell sorter, the BD FACSymphony^{™} S6 cell sorter, or the BD FACSDiscover^{™} S8 cell sorter, or other similar flow cytometers.

In some such implementations, biological instrument 102 may be configured to sort one or more components of a biological sample that are, for example, identified based on an estimated abundance of fluorophores associated with the components. As used herein, the term "sorting" may refer to separating components (*e.g.,* cells or non-cellular particles, such as biological macromolecules) of biological samples, and in some instances, delivering the separated components to one or more sample collection containers. For example, in some implementations, biological instrument 102 may be configured to sort a particular biological sample having two or more components by separating one of the components from the biological sample and delivering it to a sample collection container.

As used herein, the term "biological sample" may refer to a whole organism, plant, or fungi or a subset of animal tissues, cells or component parts, which may in certain instances, be found in blood, mucus, lymphatic fluid, synovial fluid, cerebrospinal fluid, saliva, bronchoalveolar lavage, amniotic fluid, amniotic cord blood, urine, vaginal fluid, or semen. As such, a "biological sample" may refer to both the native organism or a subset of its tissues, as well as to a homogenate, lysate, or extract prepared from the organism, or a subset of its tissues including, but not limited to, for example, plasma, serum, spinal fluid, lymph fluid, sections of the skin, respiratory, gastrointestinal, cardiovascular, and genitourinary tracts, tears, saliva, milk, blood cells, tumors, or organs. Biological samples may be any type of organismic tissue, including both healthy and diseased tissue (e*.g.,* cancerous, malignant, necrotic, etc.). In some implementations, the biological sample is a liquid sample, such as blood or a derivative thereof (*e.g.,* plasma, tears, urine, semen, etc.), where in some instances the sample is a blood sample, including whole blood, such as blood obtained from venipuncture or fingerstick (*e.g.,* where the blood may or may not be combined with any reagents prior to assay, such as preservatives, anticoagulants, etc.).

In some implementations, the source of the biological sample is a "mammal" or "mammalian," where these terms are used broadly to describe organisms that are within the class mammalia, including the orders carnivore (*e.g.,* dogs and cats), rodentia (*e.g.,* mice, guinea pigs, and rats), and primates (*e.g.,* humans, chimpanzees, and monkeys). For example, in some instances, the subjects are humans. The technology described herein may be applied to samples obtained from human subjects of both genders and/or at any stage of development (*e.g.,* neonates, infant, juvenile, adolescent, adult. The technology described herein may also be carried-out on samples from other animal subjects (*e.g.,* from "non-human subjects"), such as, but not limited to, birds, mice, rats, dogs, cats, livestock and horses.

In some implementations, biological instrument 102 may incorporate one or more aspects of the systems disclosed in U.S. Publication No. 2021/0239530 A1, U.S. Publication No. 2021/0333192 A1, U.S. Publication No. 2021/0349005 A1, U.S. Publication No. 2022/0091017 A1, U.S. Publication No. 2022/0108774 A1, U.S. Publication No. 2022/0136956 A1, U.S. Publication No. 2023/0014629 A1, U.S. Publication No. 2023/0062339 A1, U.S. Publication No. 2023/0243735 A1, U.S. Publication No. 2023/0296493 A1, U.S. Publication No. 2023/0393049 A1, U.S. Publication No. 2024/0133791 A1, U.S. Publication No. 2024/0192122 A1, U.S. Publication No. 2024/0280465 A1, U.S. Publication No. 2024/0344983 A1, and/or Int. Publication No. WO 2024/173053 A1, all of which are incorporated herein by reference.

Storage device 104 includes a memory medium, such as a hard-drive, memory card, ROM, RAM, DVD, CD-ROM, write-capable, and/or read-only memory, that is capable of storing information. Storage device 104 may be configured to receive and store biological event data (*e.g.,* flow cytometric event data) from controller 190. Storage device 104 may also be configured to allow retrieval of such biological event data by controller 190.

Display device 106 may be a monitor, a tablet computer, a smartphone, or other electronic device configured to present graphical interfaces. In some implementations, display device 106 may be configured to receive display data (*e.g.,* from controller 190). The display data may include plots of biological event data and/or gates outlining sections of the plots. The display data may also include particle parameters and/or saturated detector data. Display device 106 may also be configured to alter the information presented according to signals received from biological instrument 102, storage device 104, keyboard 108, mouse 110 and/or controller 190.

Controller 190 may include one or more processors, one or more application specific integrated circuits (ASICs), field-programmable gate arrays (FPGAs), and/or other similar components. Controller 190 may also include a memory medium, such as a hard-drive, memory card, ROM, RAM, DVD, CD-ROM, write-capable, and/or read-only memory, that is capable of storing information. As shown, controller 190 is implemented as a single controller. However, in some implementations, controller 190 may be replaced with multiple controllers that communicate with one another and distribute the workload of controller 190. As shown, controller 190 is communicatively coupled to biological instrument 102, storage device 104, display device 106, keyboard 108, and mouse 110, each of which may send and/or receive information from controller 190.

In some implementations, controller 190 may be configured to receive biological event data (*e.g.,* flow cytometric event data) from biological instrument 102. Controller 190 may also be configured to provide a graphical display, which may include a first plot of the biological event data, to display device 106. In some such implementations, controller 190 may be configured to render a region of interest as a gate around a population of biological event data shown by display device 106 (*e.g.,* overlaid upon the first plot). In some implementations, the gate may be a logical combination of one or more graphical regions of interest drawn upon a single parameter histogram or bivariate plot. In some implementations, controller 190 may be configured to display the biological event data on the display device 106 within the gate differently from other events in the biological event data outside of the gate. For example, controller 190 may be configured to render the color of biological event data contained within the gate to be distinct from the color of biological event data outside of the gate.

In some implementations, controller 190 may generate a user interface to receive example events for sorting. Controller 190 may also be configured to provide the user interface to display device 106 for display. In some implementations, the user interface may include a control for receiving example events, images, and/or gates. The example events, images, and/or gates may be provided prior to collection of event data for a biological sample or based on an initial set of events for a portion of a biological sample.

In some implementations, controller 190 may be configured to receive an input signal from an input device, such as keyboard 108 and/or mouse 110. For example, keyboard 108 and/or mouse 110 may provide an input signal to controller 190 that identifies the gate to be displayed on or manipulated via the display device 106 (*e.g.,* by clicking on or in the desired gate when the cursor is positioned there). In some implementations, keyboard 108 and/or mouse 110 may be replaced with a touchscreen, a stylus, an optical detector, a voice recognition system, and/or another type of input device. In some implementations, the input device may include multiple inputting functions. For example, as shown in FIG. 1, mouse 110 may include a right mouse button and a left mouse button, each of which may generate an input signal.

In some implementations, the receipt of an input signal (*e.g.,* from an input device, such as keyboard 108 and/or mouse 110) may trigger controller 190 to perform one or more processes. For example, the receipt of an input signal may trigger controller 190 to alter the manner in which the biological event data is displayed, alter which portions of the biological event data are displayed on the display device 106, and/or provide input for further processing, such as selection of a population of interest for particle sorting. As another example, the receipt of an input signal may trigger controller 190 to automatically modify plot visualization to facilitate the gating process described above. The modification may be based on the specific distribution of biological event data received by controller 190.

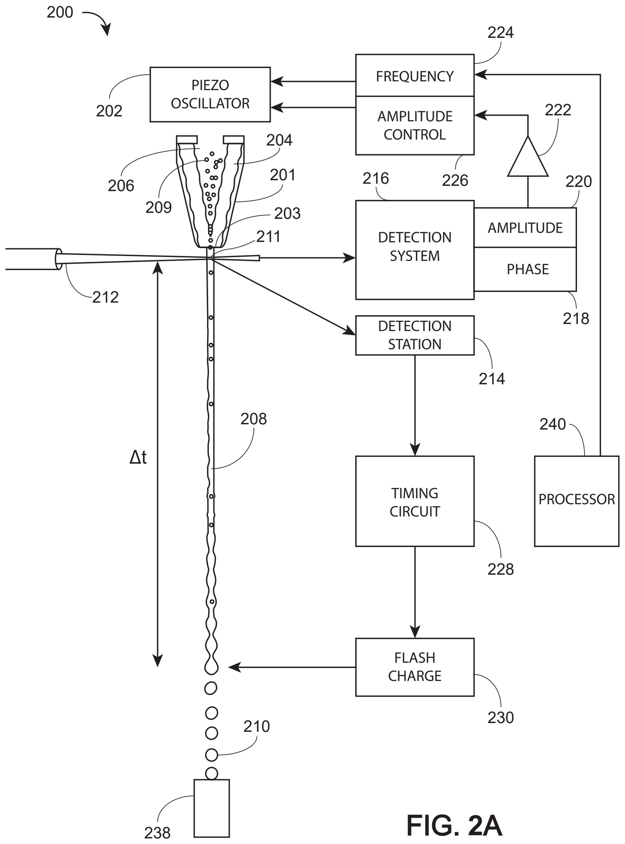

FIG. 2A illustrates a particle sorter system 200. In some implementations, biological instrument 102 may include particle sorter system 200 and/or another similar system. As used herein, the term "particles" may refer to any particulate matter that may be transported in a flow stream. Particles of interest may include, but are not limited to, cells, beads, polypeptides, polynucleotides, combinations thereof, and the like. The particles may be of any suitable size. For example, in some implementations, the particles may range from 1 µm to 20 µm in diameter. In some implementations, particle sorter system 200 is a cell sorter system.

System 200 includes a drop formation transducer 202 (*e.g.,* a piezo-oscillator) that is coupled to a fluid conduit 201 having an orifice 203. Within fluid conduit 201, a sheath fluid 204 hydrodynamically focuses a sample fluid 206 with particles 209 into a flow stream 208. Within flow stream 208, particles 209 are lined up in single file to cross an interrogation region 211 irradiated by a light source 212. Vibration of drop formation transducer 202 causes flow stream 208 to break into a plurality of drops 210, some of which contain particles 209.

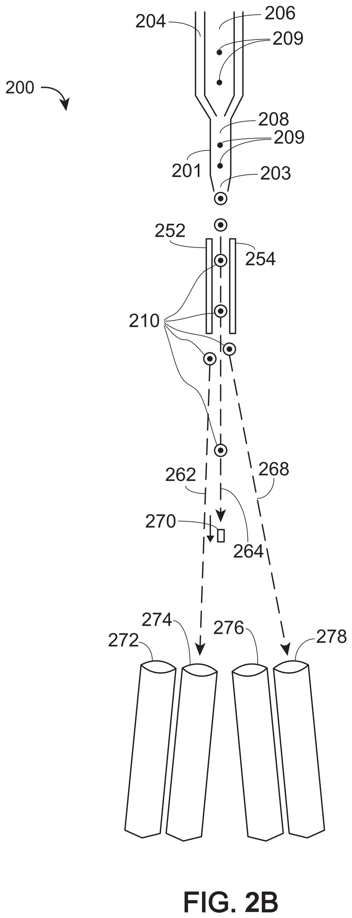

In operation, a detection station 214 (*e.g.,* an event detector) may identify when a particle of interest crosses interrogation region 211. Detection station 214 feeds into a timing circuit 228, which in turn feeds into a flash charge circuit 230. At a drop break-off point, which is informed by a timed drop delay (Δt), a flash charge may be applied to flow stream 208 such that a drop of interest carries a charge. The drop of interest may include one or more particles. The charged drop may then be sorted by activating deflection plates (*see* FIG. 2B) to deflect the drop into a vessel, such as a collection tube, a multi-well sample plate, or a microwell sample plate. In some implementations, each well or microwell may be associated with drops of particular interest. As shown in FIG. 2A, the drops may be collected in a drain receptacle 238.

A detection system 216 (*e.g.,* a drop boundary detector) may be automatically configured to determine the phase of a drop drive signal when a particle of interest passes interrogation region 211. In some implementations, detection system 216 may enable system 200 to accurately calculate the place of each detected particle in a drop. Detection system 216 may generate an amplitude signal 220 and/or a phase signal 218, which is then provided (*e.g.,* via amplifier 222) to an amplitude control circuit 226 and/or frequency control circuit 224. The amplitude control circuit 226 and/or frequency control circuit 224, in turn, controls the drop formation transducer 202.

In some implementations, sorting electronics (*e.g.,* detection station 214, detection system 216, and a processor 240) may be coupled with a memory (now shown) configured to store the detected biological events and a sort decision based thereon. The sort decision may be included in the event data for a particle. In some implementations, detection station 214 and detection system 216 may be implemented as a single detection unit or communicatively coupled such that an event measurement may be collected by either detection station 214 or detection system 216 and then provided to another component of system 200. In some implementations, the sorting electronics, amplitude control circuit 226, and/or frequency control circuit 224 may be included in a larger control system comprising one or more controllers (*e.g.,* controller 190).

Fluid conduit 201 may be implemented in a variety of different sizes and shapes. For example, as shown in FIG. 2A, fluid conduit 201 may be implemented as a nozzle and orifice 203 may be implemented as a nozzle orifice. In some such implementations, fluid conduit 201 may include a proximal cylindrical portion defining a longitudinal axis and a distal frustoconical portion that terminates in a flat surface having a nozzle orifice (*e.g.,* orifice 203) that is transverse to the longitudinal axis. In some implementations, fluid conduit 201 may include one of these portions without the other. In some implementations, the length of the proximal cylindrical portion (*e.g.,* as measured along the longitudinal axis) may range from 1 mm to 15 mm. In some implementations, the length of the distal frustoconical portion (*e.g.,* as measured along the longitudinal axis) may range from 1 mm to 10 mm. In some implementations, the diameter of an interior chamber of fluid conduit 201 may range from 1 mm to 10 mm.

Orifice 203 may be implemented in a variety of different sizes and shapes. For example, orifice 203 may have a rectilinear cross-sectional shape (*e.g.,* squares, rectangles, trapezoids, triangles, hexagons, etc.), a curvilinear cross-sectional shape (*e.g.,* circles, ovals, etc.), and/or an irregular cross-sectional shape (*e.g.,* a parabolic bottom portion coupled to a planar top portion). For example, in some implementations, orifice 203 may be a circular orifice. In some implementations, the width of orifice 203 may range from 1 µm to 20,000 µm.

Sample fluid 206 may include particles (*e.g.,* particles 209) from a biological sample (*e.g.,* a liquid sample). In some implementations, the biological sample may have a plurality of fluorophores. In some implementations, the fluorescence spectra of each fluorophore overlaps with the fluorescence spectra of at least one other fluorophore in the sample. In some implementations, particle-modulated light may be emitted by particles 209 after being irradiated by light from light source 212. In some cases, the particle-modulated light is fluorescent light. Fluorescent light may, for example, be emitted by a particle having a fluorochrome after said fluorochrome is irradiated with excitation wavelength light. In other cases, the particle-modulated light is side-scattered light (*e.g.,* light that is refracted and reflected from the surfaces and internal structures of the particle). In still other cases, the particle-modulated light includes both fluorescent light and side-scattered light. In some implementations, the particle-modulated light includes forward-scattered light (*e.g.,* light that travels through or around the particle in mostly a forward direction).

In some implementations, fluid conduit 201 includes a sample injection port (not shown) configured to provide a flow of a biological sample (*e.g.,* a liquid sample) to an interior chamber of fluid conduit 201. Depending on the desired characteristics of flow stream 208, the rate of sample conveyed to the interior chamber of fluid conduit 201 by the sample injection port may range from, for example, 1 µL/s to 500 µL/s. In some implementations, the sample injection port may be an orifice positioned in a wall of fluid conduit 201 or a conduit positioned at a proximal end of fluid conduit 201 (*e.g.,* in line with orifice 203). In some implementations, the sample injection port may have a rectilinear cross-sectional shape, a curvilinear cross-sectional shape, and/or an irregular cross-sectional shape. For example, in some implementations, the sample injection port may have a circular cross-sectional shape. In some implementations, the width of the sample injection port may range from 0.1 mm to 5.0 mm.

In some implementations, fluid conduit 201 includes a sheath fluid injection port (not shown) configured to provide a flow of a sheath fluid (*e.g.,* sheath fluid 204) to an interior chamber of fluid conduit 201. In some implementations, the sheath fluid may be provided in conjunction with the biological sample to produce a laminated flow stream of sheath fluid surrounding the biological sample flow stream (*e.g.,* sample fluid 206). Depending on the desired characteristics of flow stream 208, the rate of sheath fluid conveyed to the interior chamber of fluid conduit 201 by the sheath fluid injection port may range from, for example, 1 µL/s to 2,500 µL/s. In some implementations, the sheath fluid injection port may be an orifice positioned in a wall of fluid conduit 201. In some implementations, the sheath fluid injection port may have a rectilinear cross-sectional shape, a curvilinear cross-sectional shape, and/or an irregular cross-sectional shape. For example, in some implementations, the sheath fluid injection port may have a circular cross-sectional shape. In some implementations, the width of the sheath fluid injection port may range from 0.1 mm to 5.0 mm.

In some implementations, the diameter of flow stream 208 may be adjusted in proportion to the pressure applied to particles 209 as they are injected into sheath fluid 204. In some implementations, the flow rate of sheath fluid 204 may remain constant. In this manner, particles 209 may be injected into sheath fluid 204 and hydrodynamically focused such that laminar flow is generated and particles 209 travel along the same axis at approximately the same rate. In some implementations, flow stream 208 may include a liquid sample injected from a sample tube. In some implementations, flow stream 208 includes a buffer, such as water. In some implementations, flow stream 208 includes a narrow, rapidly flowing stream of liquid that is arranged such that linearly segregated particles transported therein (*e.g.,* particles 209) are separated from each other in a single-file manner.

As mentioned above, flow stream 208 is irradiated by light source 212 at interrogation region 211. The size of interrogation region 211 may vary depending on the properties of fluid conduit 201, such as the size and/or shape of the interior chamber of fluid conduit 201, orifice 203, the sample injection port, and/or the sheath fluid injection port. In some implementations, the width of interrogation region 211 may range from 0.01 mm to 5 mm and the length of interrogation region 211 may range from 0.01 mm to 50 mm. In some implementations, interrogation region 211 may be configured to facilitate irradiation of a planar cross-section of flow stream 208 or a diffuse field (*e.g.,* with a diffuse laser or lamp) of a predetermined length. In some implementations, interrogation region 211 includes a transparent window (not shown) that facilitates irradiation of a predetermined length of flow stream 208 (*e.g.,* ranging from 1 mm to 10 mm). In some implementations, interrogation region 211 may be configured to pass light that ranges from 100 nm to 1500 nm. For example, in some implementations, interrogation region 211 may include a transparent material, such as glass, quartz, sapphire, or plastic.

In some implementations, a cuvette (not shown) may be positioned in interrogation region 211. In some implementations, the cuvette may be configured to pass light that ranges from 100 nm to 1500 nm. For example, in some implementations, the cuvette may include a transparent material, such as glass, quartz, sapphire, or plastic. In some implementations, the cuvette may have a passage running therethrough. As used herein, the term "flow cell" may refer to a component, such as a cuvette, containing a flow channel having a liquid flow stream (*e.g.,* flow stream 208) for transporting particles (*e.g.,* particles 209) in a sheath fluid (*e.g.,* sheath fluid 204). Any convenient flow cell that delivers a liquid flow stream to an interrogation region (*e.g.,* interrogation region 211) may be employed as a flow cell described herein. In some implementations, the flow cell is a cylindrical flow cell, a frustoconical flow cell, or a flow cell that includes a proximal cylindrical portion defining a longitudinal axis and a distal frustoconical portion that terminates in a flat surface having an orifice that is transverse to the longitudinal axis. In some implementations, a flow cell is a stream-in-air flow cell in which light interrogation of the particles in a liquid flow stream occurs in free space.

Light source 212 may be configured to emit wavelengths of light that range from 200 nm to 1500 nm. In some implementations, light source 212 may be a broadband light source that is configured to emit light having a broad range of wavelengths (*e.g.,* spanning 500 nm or more). In some implementations, light source 212 may be a narrowband light source that is configured to emit light having a narrow range of wavelengths (*e.g.,* spanning 50 nm or less). In some implementations, light source 212 may be positioned between 0.001 mm and 100 mm from flow stream 208. In some implementations, light source 212 may be configured to irradiate flow stream 208 at an angle ranging from 10° to 90° (*e.g.,* relative the vertical axis of flow stream 208).

Light source 212 may be implemented as a single light source or as a plurality of discrete light sources (*e.g.,* a combination of differing or similar types of light sources). Where more than one light source is employed, flow stream 208 may be irradiated with the light sources simultaneously, sequentially, or a combination thereof. Where more than one light source is employed to irradiate flow stream 208 sequentially, the time each light source irradiates flow stream 208 may range from 0.001 µs to 60 µs. In some implementations, the corresponding irradiation durations may be the same or different for each light source. In some implementations, a time period between each sequential irradiation may range from 0.001 µs to 60 µs. In some implementations, these time periods may be the same or different.

In some implementations, light source 212 is a laser. For example, light source 212 may be a gas laser, such as a helium-neon laser, an argon laser, a krypton laser, a xenon laser, a nitrogen laser, a CO₂ laser, a CO laser, an argon-fluorine (ArF) excimer laser, a krypton-fluorine (KrF) excimer laser, a xenon chlorine (XeCl) excimer laser, a xenon-fluorine (XeF) excimer laser, or a combination thereof. As another example, light source 212 may be a dye laser, such as a stilbene laser, a coumarin laser, a rhodamine laser, or a combination thereof. As yet another example, light source 212 may be a metal-vapor laser, such as a helium-cadmium (HeCd) laser, a helium-mercury (HeHg) laser, a helium-selenium (HeSe) laser, a helium-silver (HeAg) laser, a strontium laser, a neon-copper (NeCu) laser, a copper laser, a gold laser, or a combination thereof. As yet another example, light source 212 may be a solid-state laser, such as a ruby laser, an Nd:YAG laser, an NdCrYAG laser, an Er:YAG laser, an Nd:YLF laser, an Nd:YVO₄ laser, an Nd:yCa₄O(BO₃)₃ laser, an Nd:YCOB laser, a titanium sapphire laser, a thulim YAG laser, a ytterbium YAG laser, a ytterbium₂O₃ laser, a cerium doped laser, or a combination thereof. As yet another example, light source 212 may be a semiconductor diode laser, an optically pumped semiconductor laser (OPSL), a frequency doubled or tripled implementation of any of the above mentioned lasers, or a combination thereof.

In some implementations, light source 212 is a non-laser light source. For example, light source 212 may be a lamp, such as a halogen lamp, a deuterium arc lamp, a xenon arc lamp, a stabilized fiber-coupled broadband light source, or a combination thereof. As another example, light source 212 may be a light-emitting diode ("LED"), such as a broadband LED with continuous spectrum, a superluminescent emitting diode, a semiconductor LED, a wide spectrum LED, a narrow wavelength LED, or a combination thereof.

Light source 212 may be configured to irradiate flow stream 208 continuously or in discrete intervals. For example, light source 212 may be configured to irradiate flow stream 208 continuously, such as with a continuous wave laser that continuously irradiates flow stream 208 at interrogation region 211. As another example, light source 212 may be configured to irradiate flow stream 208 at discrete intervals, such as every 0.001 ms, every 0.1 ms, every 1 ms, every 10 ms, or every 1000 ms. In some such implementations, system 200 may include one or more additional components to provide for intermittent irradiation of flow stream 208. For example, system 200 may include one or more laser beam choppers (*e.g.,* manually or computer-controlled beam stops for blocking and exposing flow stream 208 to light source 212).

In some implementations, light source 212 may be configured to generate two or more beams of frequency shifted light. In some such implementations, light source 212 includes a laser, a radiofrequency generator, and an acousto-optic device configured to generate two or more angularly deflected laser beams. In some implementations, the laser may be a pulsed laser or a continuous wave laser. In some implementations, the radiofrequency generator may be a direct digital synthesizer (DDS), an arbitrary waveform generator (AWG), or an electrical pulse generator. In some implementations, the radio frequency generator may generate two or more radiofrequency drive signals. In some implementations, the radiofrequency drive signals may have an amplitude ranging from about 0.001 V to about 500 V. In some implementations, the radiofrequency drive signals may have a frequency ranging from about 0.001 MHz to about 500 MHz. In some implementations, the acousto-optic device may be an acousto-optic deflector. In some implementations, the acousto-optic device may be configured to generate the angularly deflected laser beams from the light from the laser and the radio frequency drive signals from the radiofrequency generator.

In some implementations, light source 212 may be configured to produce two or more angularly deflected laser beams having a desired intensity profile. For example, light source 212 may be configured to produce two or more angularly deflected laser beams with the same and/or different intensities. In some implementations, light source 212 may be configured to produce an output laser beam having increasing intensity from the edges to the center of the output laser beam along the horizontal axis. For example, the intensity of the angularly deflected laser beam at the center of the output beam may range from 0.1% to about 99% of the intensity of the angularly deflected laser beams at the edge of the output laser beam along the horizontal axis. Similarly, in some implementations, light source 212 may be configured to produce an output laser beam having an increasing intensity from the edges to the center of the output laser beam along the horizontal axis. For example, the intensity of the angularly deflected laser beam at the edges of the output beam may range from 0.1% to about 99% of the intensity of the angularly deflected laser beams at the center of the output laser beam along the horizontal axis. In some implementations, light source 212 may be configured to produce an output laser beam having an intensity profile with a Gaussian distribution or a top hat intensity profile along the horizontal axis.

In some implementations, light source 212 may be configured to produce two or more angularly deflected laser beams that are spatially separated. For example, the angularly deflected laser beams may be separated by a distance ranging from 0.001 µm to 5,000 µm. In some implementations, light source 212 may be configured to produce two or more angularly deflected laser beams that overlap (*e.g.,* with an adjacent angularly deflected laser beam along a horizontal axis). In some implementations, the overlap between adjacent angularly deflected laser beams (*e.g.,* overlap of beam spots) may range from 0.001 µm to 100 µm.

In some implementations, detection station 214 and/or detection system 216 may include a photodetector array of a plurality of photodetectors. In some implementations, the photodetector array may have a length that ranges from 0.01 mm to 100 mm, a width that ranges from 0.01 mm to 100 mm, and/or an overall area that ranges from 0.1 mm² to 10,000 mm². In some implementations, detection station 214 and/or detection system 216 may be configured to measure light continuously or in discrete intervals. For example, in some implementations, detection station 214 and/or detection system 216 may be configured to take measurements of the collected light continuously. As another example, in some implementations, detection station 214 and/or detection system 216 may be configured to take measurements in discrete intervals, such as every 0.001 ms, every 0.1 ms, every 1 ms, every 10 ms, or every 1000 ms.

In some implementations, at least some of the photodetectors of detection station 214 and/or detection system 216 may be configured to measure collected light at one or more wavelengths. For example, in some implementations, at least some of the photodetectors may be configured to measure collected light over a range of wavelengths (*e.g.,* 200 nm-1000 nm). In some implementations, at least some of the photodetectors may be image and/or optical sensors, such as active-pixel sensors (APSs), avalanche photodiodes (APDs), active pixel sensors (APS), complementary metal-oxide semiconductor (CMOS) image sensors, N-type metal-oxide semiconductor (NMOS) image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes, phototransistors, quantum dot photoconductors, photodiodes, or combinations thereof. The photodetectors may be arranged in a variety of different geometric configurations, such as a square configuration, a rectangular configuration, a trapezoidal configuration, a triangular configuration, a hexagonal configuration, a circular configuration, or an irregular configuration. In some implementations, at least some of the photodetectors may be oriented with respect to one another (*e.g.,* in an X-Z plane) at an angle ranging from 10° to 180°. In some implementations, each one of the photodetectors may have an active surface with a width that ranges from 5 µm to 250 µm, a length that ranges from 5 µm to 250 µm, and/or an overall area that ranges from 25 µm² to 10,000 µm². In some implementations, the gain of at least some of the photodetectors of detection station 214 and/or detection system 216 may be adjusted (*e.g.,* by processor 240 or another control system).

FIG. 2B illustrates an implementation of system 200 that includes deflection plates 252 and 254. In operation, a charge may be applied via a stream-charging wire in a barb. This creates a stream of droplets 210 containing particles 209. As explained above, particles 209 may be illuminated by one or more light sources (*e.g.,* light source 212) to generate light scatter and fluorescence information. The information for a particle may be analyzed by, for example, sorting electronics (*e.g.*, detection station 214, detection system 216, and a processor 240) and/or another detection system. Deflection plates 252 and 254 may be independently controlled to attract or repel a charged droplet to guide the droplet toward a destination collection receptacle (*e.g.,* one of receptacles 272, 274, 276, or 278). For example, as shown in FIG. 2B, deflection plates 252 and 254 may be controlled to direct a particle along a first path 262 toward receptacle 274 or along a second path 268 toward receptacle 278. If the particle is not of interest (*e.g.,* does not exhibit scatter or illumination information within a specified sort range), deflection plates 252 and 254 may be controlled to allow the particle to continue along a flow path 264. Such uncharged droplets may pass into a waste receptacle *(*e.g., via aspirator 270).

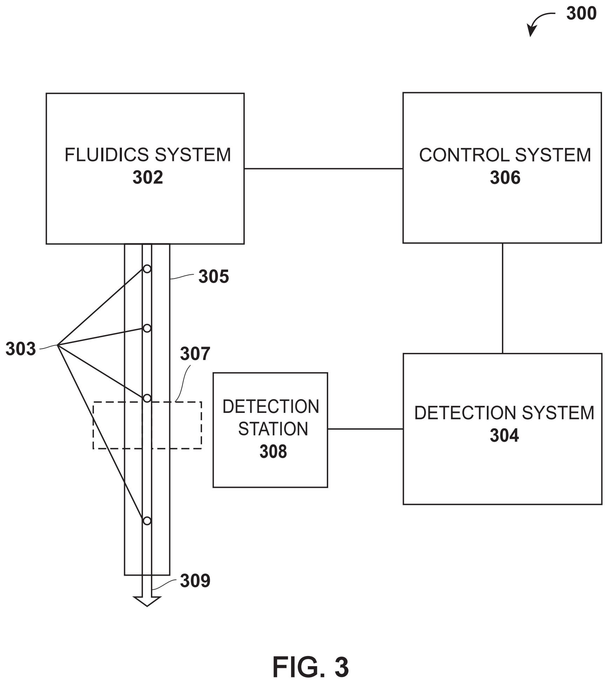

FIG. 3 illustrates a functional block diagram of a particle analysis system 300. System 300 may be used to analyze and/or characterize particles, with or without physically sorting the particles into collection vessels (*e.g.,* as discussed above in relation to particle sorter system 200 of FIGS. 2A and 2B). As shown, system 300 includes a fluidics system 302, a detection system 304, a control system 306, and a detection station 308. Fluidics system 302 includes a sample tube 305 and a flow stream within the sample tube in which particles 303 of a sample move along a common sample path 309. Fluidics system 302 may be compared to many of the components of system 200. As such, fluidics system 302 may be configured according to any of the implementations discussed above regarding, for example, fluid conduit 201, drop formation transducer 202, orifice 203, flow stream 208, and/or drain receptacle 238.

Detection system 304 may be configured to collect one or more signals from each particle 303 as it passes one or more detection stations (*e.g.,* detection station 308) along common sample path 309. As shown, detection station 308 monitors an interrogation region 307 of common sample path 309. In some implementations, detection can include detecting light or one or more other properties of particles 303 as they pass through interrogation region 307. In some such implementations, the gain of at least some of the photodetectors of detection station 308 may be adjusted (*e.g.,* by detection system 304, control system 306, or another control system). As shown, system 300 includes one detection station and one interrogation region. However, in some implementations, system 300 may include multiple detection stations and multiple corresponding interrogation regions. Furthermore, in some implementations, at least some of the detection stations may monitor more than one interrogation region.

Each signal collected by detection system 304 may be assigned a signal value to form a data point for each particle. As described above, this data may be referred to as event data. The data point may be a multidimensional data point including values for respective properties measured for a particle. In some implementations, detection system 304 may be configured to collect a succession of such data points during a time interval.

Control system 306 may include one or more processors, an amplitude control circuit and/or a frequency control circuit (*e.g.,* as discussed above in relation to system 200). In some implementations, control system 306 may be configured to generate a calculated signal frequency for at least a portion of the above-noted time interval based on a Poisson distribution and/or the number of data points collected by detection system 304 during the time interval. In some such implementations, control system 306 may be further configured to generate an experimental signal frequency based on the number of data points in the portion of the time interval. In some implementations, control system 306 may additionally compare the experimental signal frequency with that of a calculated signal frequency or a predetermined signal frequency. In some implementations, detection system 304, control system 306, and/or detection station 308 may be included in a larger control system comprising one or more controllers (e.g., controller 190).

In some implementations, particles 303 may be associated (*e.g.,* chemically associated (*e.g.,* covalently, ionically) or physically associated) with one or more fluorophores and detection station 308 may be configured to collect particle-modulated light emitted by particles 303 (*e.g.,* after being irradiated by light from a light source, such as light source 212). In some such implementations, detection system 304 and/or control system 306 may be configured to calculate the abundance of fluorophores associated with a particle from the particle-modulated light. For example, in some implementations, the relative or absolute abundance of each fluorophore associated with a particle is calculated from the particle-modulated light. When the fluorophores associated with particles 303 have overlapping spectra, this analysis may further include spectrally resolving the particle-modulated light (*e.g.,* by calculating a spectral unmixing matrix).

In some implementations, a particle may be identified or classified by detection system 304 and/or control system 306 based on the relative abundance of each fluorophore determined to be associated with the particle. In some such implementations, the particle may be identified or classified by comparing the relative or absolute abundance of each fluorophore associated with the particle with a control sample having particles of known identity. In some implementations, the particle may be identified or classified by conducting spectroscopic and/or other assay analysis of a population of particles having the calculated relative or absolute abundance of associated fluorophores. In some implementations, detection system 304 and/or control system 306 may be configured to operate fluidics system 302 to sort particles 303 (*e.g.,* via one or more deflection plates) based on the estimated abundance of the fluorophores associated with each one of particles 303.

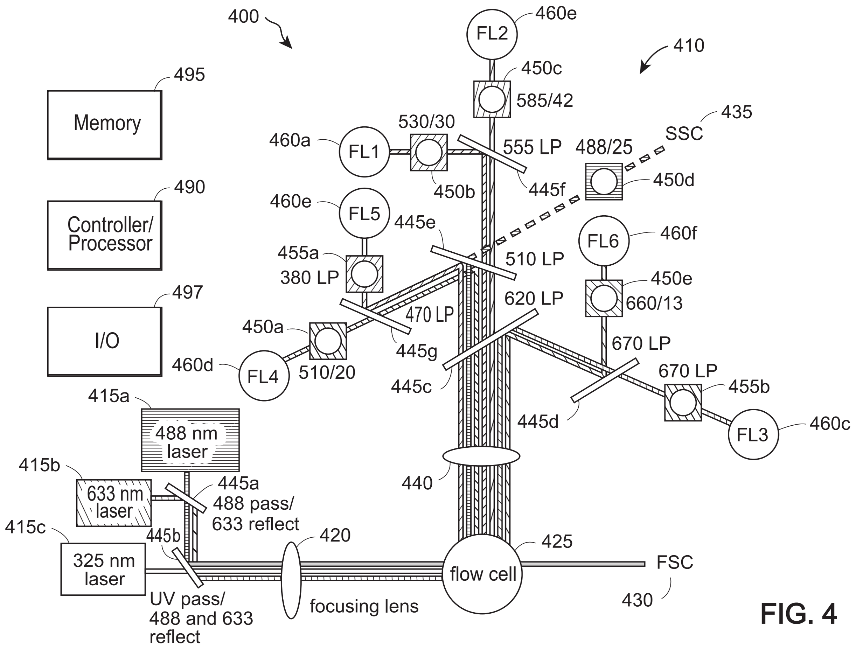

FIG. 4 illustrates a system 400 for flow cytometry. As shown, system 400 includes a flow cytometer 410, a controller/processor 490, and a memory 495. Flow cytometer 410 includes one or more excitation lasers 415a-415c, a focusing lens 420, a flow cell 425, a forward-scatter detector 430, a side-scatter detector 435, a fluorescence collection lens 440, one or more beam splitters 445a-445g, one or more bandpass filters 450a-450e, one or more longpass ("LP") filters 455a-455b, and one or more fluorescent detectors 460a-460f.

Many of the components of system 400 may be compared to components of the systems described above (*e.g.,* systems 100, 200, and 300). For example, (a) excitation lasers 415a-415c, (b) flow cell 425, and (c) fluorescent detectors 460a-460f may be compared, respectively, to (a) light source 212, (b) interrogation regions 211 and 307, and (c) detection station 214, detection system 216, and detection station 308. As such, any of the components of system 400 may be configured according to any of the corresponding implementations discussed above. Furthermore, in some implementations, aspects of system 400 may be incorporated into one of the systems described above. For example, comparable optical adjustment components may be incorporated into any of the systems described above.

In operation, excitation lasers 415a-415c emit light in the form of a laser beam. As shown, the wavelengths of the laser beams emitted from excitation lasers 415a-415c are 488 nm, 633 nm, and 325 nm, respectively. However, in other implementations, different wavelengths and/or ranges of wavelengths may be used. The laser beams are first directed through beam splitters 445a and 445b. Beam splitter 445a transmits light at 488 nm and reflects light at 633 nm. Beam splitter 445b transmits ultraviolet (UV) light (*e.g.,* light with a wavelength in the range of 10 nm to 400 nm) and reflects light at 488 nm and 633 nm.

The laser beams are then directed to a focusing lens 420, which focuses the beams onto the portion of a flow stream (*e.g*., flow stream 208) where particles of a biological sample may be located within a flow cell 425 (*see, e.g.,* interrogation regions 211 and 307). In some implementations, focusing lens 420 may be configured to reduce the dimensions of the beams. In some implementations, focusing lens 420 may have a magnification ratio ranging from 0.1 to 0.95. In some implementations, the focal length of focusing lens 420 ranges from 5 mm to 20 mm. In some implementations, flow cell 425 may be part of a fluidics system (*e.g.,* fluidics system 302) that directs particles (*e.g.,* one at a time) in a stream to the focused laser beam emitted from focusing lens 420 for interrogation. For example, flow cell 425 may be a flow cell in a benchtop cytometer or a nozzle tip in a stream-in-air cytometer.

The light from the laser beam(s) interacts with the particles of the biological sample by diffraction, refraction, reflection, scattering, and/or absorption with re-emission at various different wavelengths depending on the characteristics of the particle, such as its size, internal structure, and the presence of one or more fluorescent molecules attached to or naturally present on or in the particle. The fluorescence emissions as well as the diffracted light, refracted light, reflected light, and scattered light may be routed to one or more of forward-scatter detector 430, side-scatter detector 435, and one or more fluorescent detectors 460a-460f through one or more of beam splitters 445a-445g, bandpass filters 450a-450e, longpass filters 455a-455b, and/or fluorescence collection lens 440.

Fluorescence collection lens 440 collects light emitted from the particle-laser beam interaction (*e.g.,* particle-modulated light) and routes that light towards one or more beam splitters and filters. Bandpass filters, such as bandpass filters 450a-450e, allow a narrow range of wavelengths to pass through the filter. For example, bandpass filter 450a is a 510/20 filter. The first number represents the center of a spectral band. The second number provides a range of the spectral band. Thus, a 510/20 filter extends 10 nm on each side of the center of the spectral band, or from 500 nm to 520 nm. Shortpass filters transmit wavelengths of light equal to or shorter than a specified wavelength. Longpass filters, such as longpass filters 455a and 455b, transmit wavelengths of light equal to or longer than a specified wavelength of light. For example, longpass filter 455a, which is a 670 nm longpass filter, transmits light equal to or longer than 670 nm. Filters are often selected to optimize the specificity of a detector for a particular fluorescent dye. The filters may be configured so that the spectral band of light transmitted to the detector is close to the emission peak of a fluorescent dye.

Beam splitters direct light of different wavelengths in different directions. Beam splitters may be characterized by filter properties, such as shortpass and longpass. For example, beam splitter 445g is a 620 SP beam splitter, meaning that the beam splitter 445g transmits wavelengths of light that are 620 nm or shorter and reflects wavelengths of light that are longer than 620 nm in a different direction. In some implementations, one or more of beam splitters 445a-445g may include optical mirrors, such as dichroic mirrors.

The forward-scatter detector 430 is positioned slightly off axis from the direct beam through flow cell 425 and is configured to detect diffracted light (*e.g.,* the excitation light that travels through or around the particle in mostly a forward direction). The intensity of the light detected by forward-scatter detector 430 is dependent on the overall size of the particle. Forward-scatter detector 430 may include a photodiode. Side-scatter detector 435 is configured to detect refracted and reflected light from the surfaces and internal structures of the particle, which tends to increase with increasing particle complexity of structure. The fluorescence emissions from fluorescent molecules associated with the particle may be detected by one or more of fluorescent detectors 460a-460f. Side-scatter detector 435 and/or fluorescent detectors 460a-460f may include photomultiplier tubes. The signals detected at forward-scatter detector 430, side-scatter detector 435 and/or fluorescent detectors 460a-460f may be converted to electronic signals (*e.g.,* voltages) by the detectors. This data may provide information about the biological sample. In some such implementations, the gain of forward-scatter detector 430, side-scatter detector 435 and/or at least one of fluorescent detectors 460a-460f may be adjusted (*e.g.,* by controller/processor 490 or another control system).

Various modifications can be made to flow cytometer 410. For example, flow cytometer 410 may have any number of lasers, beam splitters, filters, and/or detectors at various wavelengths and in various different configurations. For example, flow cytometer 410 may include one or more additional optical adjustment components, each of which is configured to increase the dimensions of the light, focus the light, split the light, and/or collimate the light. For example, flow cytometer 410 may include a magnifying lens configured to increase the dimensions of the light. As another example, flow cytometer 410 may include a collimator. As used herein, the term "collimate" may refer to optically adjusting the collinearity of light propagation or reducing divergence by the light from a common axis of propagation. In some cases, collimating includes narrowing the spatial cross section of a light beam. In some implementations, the collimator may include one or more mirrors, one or more curved lenses, or a combination thereof.

As shown in FIG. 4, flow cytometer 410 is controlled by controller/processor 490. Furthermore, the measurement data from the detectors may be stored in memory 495 and processed by controller/processor 490. Although not shown explicitly, controller/processor 490 is coupled to the detectors to receive the output signals therefrom, and may also be coupled to electrical and electromechanical components of the flow cytometer 400 to control the lasers, fluid flow parameters, and the like. Input/output (I/O) capabilities 497 may be also provided in system 400. In some implementations, memory 495, controller/processor 490, and I/O 497 may be provided as an integral part of flow cytometer 410. In some implementations, a display may also form part of I/O capabilities 497 for presenting experimental data to users of system 400. Alternatively, some or all of memory 495, controller/processor 490, and/or I/O capabilities may be included in a larger control system comprising one or more controllers (*e.g.,* controller 190). In some implementations, some or all of memory 495 and/or controller/processor 490 may be in wireless or wired communication with the flow cytometer 410. In some implementations, controller/processor 490 in conjunction with memory 495 and I/O 497 may be configured to perform various functions related to the preparation and analysis of a flow cytometer experiment.

As shown, system 400 includes six different detectors that detect fluorescent light in six different wavelength bands (each of which may be referred to herein as a "filter window") as defined by the configuration of filters and/or splitters in the beam path from flow cell 425 to each detector. Different fluorescent molecules used for a flow cytometer experiment will emit light in their own characteristic wavelength bands. The particular fluorescent labels used for an experiment and their associated fluorescent emission bands may be selected to generally coincide with the filter windows of the detectors. However, as more detectors are provided, and more labels are utilized, perfect correspondence between filter windows and fluorescent emission spectra may not be possible. It is generally true that although the peak of the emission spectra of a particular fluorescent molecule may lie within the filter window of one particular detector, some of the emission spectra of that label will also overlap the filter windows of one or more other detectors. This may be referred to as spillover.

In some implementations, I/O 497 may be configured to receive data regarding a flow cytometer experiment having a panel of fluorescent labels and a plurality of cell populations having a plurality of markers, each cell population having a subset of the plurality of markers. In some implementations, I/O 497 may also be configured to receive biological data assigning one or more markers to one or more cell populations, marker density data, emission spectrum data, data assigning labels to one or more markers, and cytometer configuration data. Flow cytometer experiment data, such as label spectral characteristics and flow cytometer configuration data, may also be stored in memory 495. In some implementations, controller/processor 490 may be configured to evaluate one or more assignments of labels to markers.

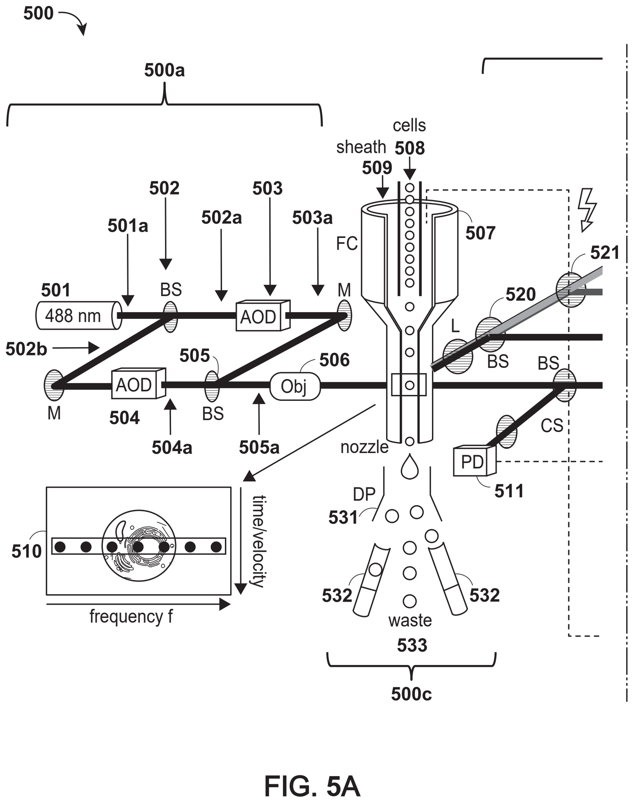

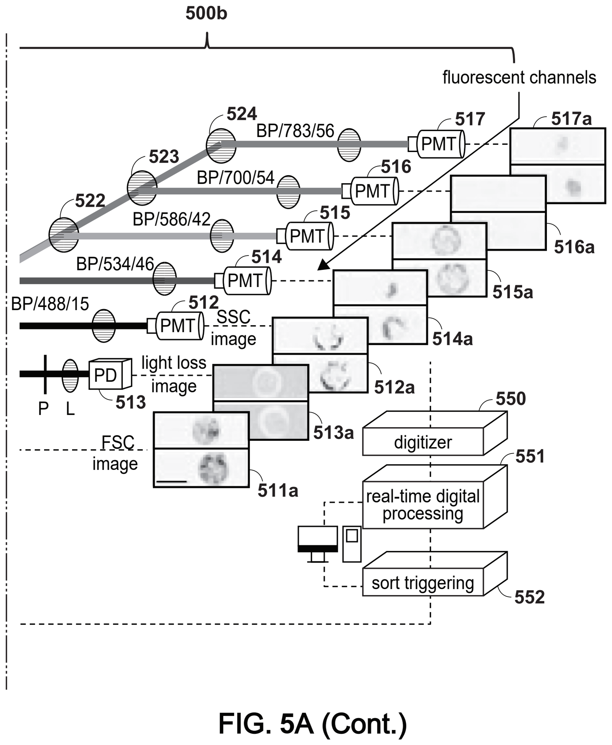

FIG. 5A illustrates a radio frequency tagged emission (FIRE) particle sorter system 500. As shown, system 500 includes a light irradiation component 500a, a light detection system 500b, a sorting component 500c, a flow cell 507, irradiation region 510, processors 550 and 551, and sort trigger 552. Light irradiation component 500a includes a light source 501, beamsplitters 502 and 505, acousto-optic devices (AODs) 503 and 504, and an optical component 506. Light detection system 500b includes photodetectors 511-517, beamsplitter 520, and bandpass optical components 521, 522, 523 and 524. Sorting component 500c includes deflection plates 531 and sample containers 532.

Many of the components of system 500 may be compared to components of the systems described above (*e.g.,* systems 100, 200, 300, and 400). For example, (a) light irradiation component 500a, (b) irradiation region 510, (c) light detection system 500b, and (d) deflection plates 531 may be compared, respectively, to (a) light source 212 and excitation lasers 415a-415c, (b) interrogation regions 211 and 307 and flow cell 425, (c) detection station 214, detection system 216, detection station 308, and fluorescent detectors 460a-460f, and (d) deflection plates 252 and 254. As such, any of the components of system 500 may be configured according to any of the corresponding implementations discussed above. Furthermore, in some implementations, aspects of system 500 may be incorporated into one of the systems described above. For example, comparable optical adjustment components and/or AODs may be incorporated into any of the systems described above.

As shown, light source 501 (*e.g.,* a 488 nm laser) generates output beam of light 501a, which is then split with beamsplitter 502 into beams 502a and 502b. Light beam 502a is propagated through AOD 503 (*e.g.,* an acousto-optic deflector) to generate an output beam 503a having one or more angularly deflected beams of light. In some implementations, output beam 503a includes a local oscillator beam and a plurality of radiofrequency comb beams. Light beam 502b is propagated through AOD 504 (*e.g.,* an acousto-optic deflector) to generate an output beam 504a having one or more angularly deflected beams of light. In some implementations, output beam 504a includes a local oscillator beam and a plurality of radiofrequency comb beams. Output beams 503a and 504a generated from AODs 503 and 504, respectively, are combined with beamsplitter 505 to generate output beam 505a, which is then conveyed through an optical component 506 (*e.g.,* an objective lens) to irradiate particles in flow cell 507. In some implementations, AOD 503 splits a single laser beam into an array of beamlets, each having different optical frequency and angle, and AOD 504 tunes the optical frequency of a reference beam, which is then overlapped with the array of beamlets at beamsplitter 505.

Output beam 505a irradiates sample particles 508 propagating through flow cell 507 (*e.g.,* with sheath fluid 509) at irradiation region 510. As shown in irradiation region 510, a plurality of beams (*e.g.,* angularly deflected radiofrequency shifted beams of light depicted as dots across irradiation region 510) overlaps with a reference local oscillator beam (depicted as the shaded line across irradiation region 510). Due to their differing optical frequencies, the overlapping beams exhibit a beating behavior, which causes each beamlet to carry a sinusoidal modulation at a distinct frequency f₁₋ₙ.

Particle-modulated light from the irradiated sample particles 508 is conveyed to light detection system 500b. Forward-scatter photodetector 511 generates forward-scatter images 511a from the particle-modulated light. Side-scatter photodetector 512 generates side-scatter images 512a from the particle-modulated light. Brightfield photodetector 513 generates light loss images 513a from the particle-modulated light. In some implementations, forward-scatter photodetector 511 and side-scatter photodetector 512 are photodiodes (*e.g.,* APDs). In some instances, brightfield photodetector 513 is a photomultiplier tube (PMT). Fluorescence from the irradiated sample particles 508 is also detected with fluorescence photodetectors 514-517. In some implementations, fluorescence photodetectors 514-517 are photomultiplier tubes. In some such implementations, the gain of photodetectors 511-517 may be adjusted (*e.g.,* by processors 550 and/or 551 or another control system).

Particle-modulated light from the irradiated sample particles 508 is directed to side-scatter photodetector 512 and fluorescence photodetectors 514-517 through beamsplitter 520. Bandpass optical components 521, 522, 523 and 524 (*e.g.,* dichroic mirrors) propagate predetermined wavelengths of light to fluorescence photodetectors 514-517. In some implementations, optical component 521 is a 534 nm/40 nm bandpass. In some implementations, optical component 522 is a 586 nm/42 nm bandpass. In some implementations, optical component 523 is a 700 nm/54 nm bandpass. In some implementations, optical component 524 is a 783 nm/56 nm bandpass. The first number represents the center of a spectral band. The second number provides a range of the spectral band. Thus, a 510/20 filter extends 10 nm on each side of the center of the spectral band, or from 500 nm to 520 nm.

Data signals generated in response to light received at photodetectors 511-517 are analyzed with processors 550 and 551. Images 511a-517a may be generated in each light detection channel. based on the data signals generated in processors 550 and 551. Each light detection channel may correspond with one of photodetectors 511-517. Image-enabled sorting may be performed in response to a sort signal generated in sort trigger 552. For example, in response to a sort signal, sorting component 500c may operate deflection plates 531 to deflect particles 508 into sample containers 532 or to waste stream 533. In some implementations, processors 550 and 551 and/or sort trigger 552 may be included in a larger control system comprising one or more controllers (*e.g.,* controller 190).

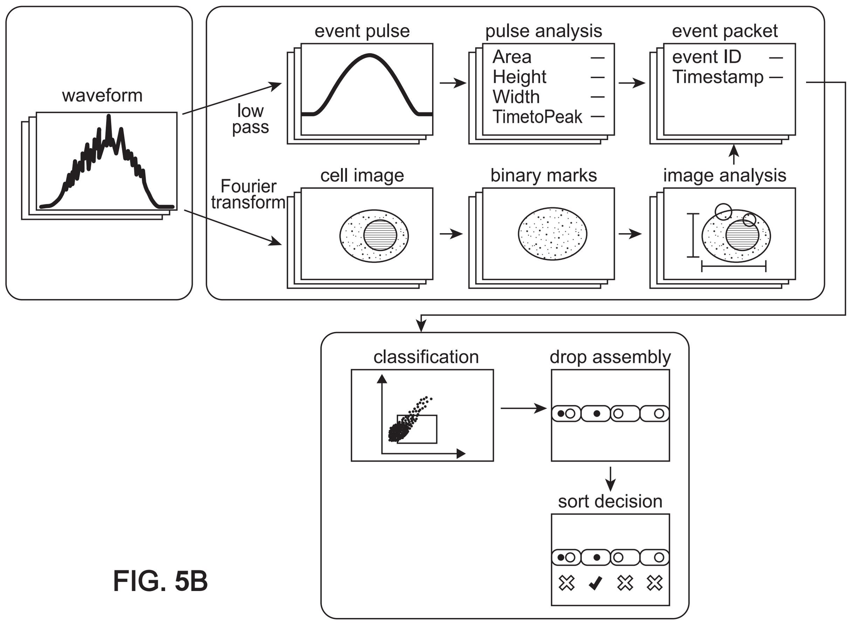

FIG. 5B illustrates image-enabled particle sorting data processing. In some instances, image-enabled particle sorting data processing is a low-latency data processing pipeline. As shown, each one of a plurality of photodetectors produce a pulse with high-frequency modulations encoding an image (*see* "waveform" in FIG. 5B). Fourier analysis is performed to reconstruct the image from the modulated pulse. An image processing pipeline produces a set of image features (*see* "image analysis" in FIG. 5B), which are combined with features derived from a pulse processing pipeline (*see* "event packet" in FIG. 5B). Real-time sort classification electronics then classify the particle based on image features and produce a sort decision that is used to selectively charge the droplets.

In any of the systems described above, one or more processors (e.g., the one or more processors included in biological instrument 102, controller 190, detection station 214, detection system 216, processor 240, detection system 304, control system 306, detection station 308, controller/processor 490, processor 550, processor 551, and/or sort trigger 552) may be configured to adjust the gain of one or more detectors (*e.g.,* the one or more detectors included in detection station 214, detection system 216, detection station 308, fluorescent detectors 460a-460f, and/or photodetectors 511-517). The one or more detectors may be photodetectors and/or image sensors. In some implementations, the gain of a detector may be determined from a ratio of the output signal to the input signal. In some such implementations, the gain of a detector is positively correlated to voltage such that the gain of the detector may be controlled by modulating the voltage applied to the detector. As used herein, the term "detector voltage" may refer to the voltage applied to a detector to adjust the gain of that detector. In some implementations, the one or more processors may be advantageously configured to modify the measurements collected by the one or more detectors to provide gain-independent values. As a result, in some such implementations, sample median fluorescence intensities (MFIs) may be maintained irrespective of the gain of the one or more detectors. Moreover, in some such implementations, the one or more processors may be configured to optimize the gain to ensure consistency in sensitivity, resolution, and/or dynamic range of the one or more detectors. For example, in some implementations, the one or more processors may be configured to adjust the gain of the one or more detectors to maximize a signal-to-noise ratio (SNR) for the one or more detectors.

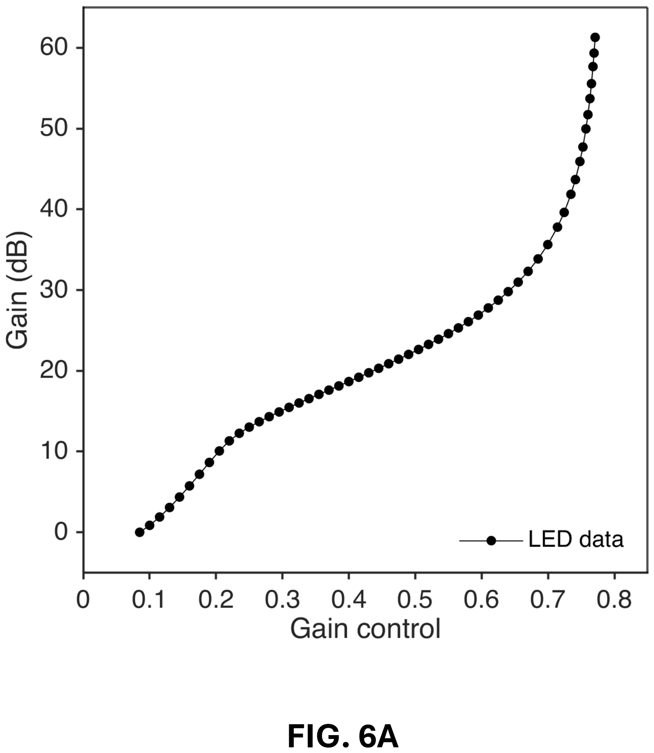

To provide gain-independent values, the one or more processors may be configured to perform a data normalization method. The data normalization method may include a step for calculating a linear gain as a function of a user-selectable parameter (*e.g.,* detector voltage). As used herein, the term "gain calibration" may be used to refer to this process. In some implementations, during a gain calibration process, measurements (*e.g.,* generated by at least one of the detectors) of a reference optical source (*e.g.,* an LED pulser) may be obtained at different detector voltages to derive a lookup table for linear changes (*e.g.,* increases or decreases) in particle MFI with respect to the detector voltage. The resulting lookup table makes it possible for a user to adjust the detector gain (rather than voltage), which has a more intuitive impact on data scaling between settings. In some implementations, the lookup table derived from a gain calibration process may be used to ensure a linear MFI as the detector voltage is changed. In some implementations, the values stored in the lookup table may be used to derive a function (*e.g.,* in continuous time) for calculating a linear gain as a function of a user-selectable parameter (*e.g.,* detector voltage). In some implementations, the gain calibration process may also provide instrument performance metrics, such as characterization of system background noise in calibrated units and/or the resolution of each detector in calibrated units. FIG. 6A illustrates a graph that visually represents the values stored in an exemplary lookup table derived from a gain calibration process. For simplicity, the data for a single detector is illustrated in FIG. 6A. However, a lookup table (or a corresponding function) may be generated for a plurality of detectors in an instrument (*e.g.,* each of a plurality of detectors in a flow cytometer) during a gain calibration process.

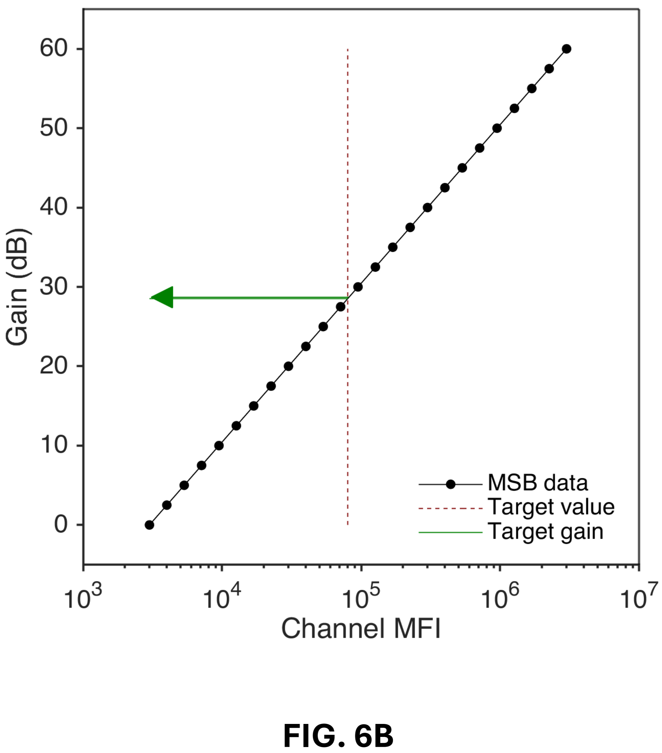

The data normalization method may further include one or more steps for determining and/or setting a target gain required to achieve a target MFI (*e.g.,* associated with a quality control (QC) bead, such as a multi-spectral bead (MSB)), for each one of a plurality of detectors. As used herein, the term "resolution adjustment" may be used to refer to this process. FIG. 6b illustrates a graph that visually represents the measured MFI of an MSB at a plurality of detector voltages. The graph further includes a dashed line at a target MFI, which in this particular example is 8 × 10⁴, and an arrow pointing to the corresponding target gain, which in this particular example is 29 dB. In other implementations, the target MFI and the target gain may be set at different values. For example, it may be necessary to change these values to accommodate a different type of QC bead. In some implementations, the target MFI may be between 1 and 2⁶⁴. Similarly, in some implementations, the target gain may be between 0 and 100 dB. For simplicity, the data for a single detector is illustrated in FIG. 6B. However, a target gain may be determined and/or set for a plurality of detectors in an instrument (*e.g.,* each of a plurality of detectors in a flow cytometer) during a resolution adjustment process.

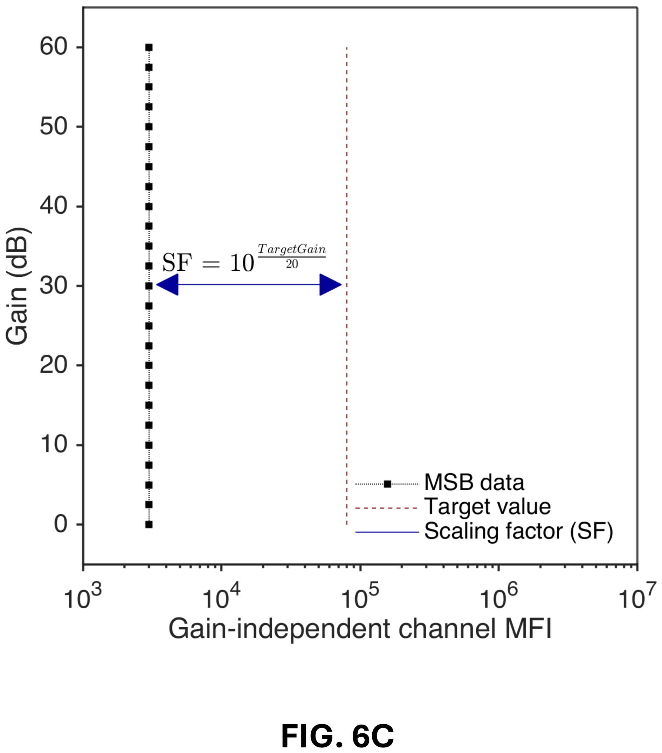

The data normalization method may further include a step for applying one or more gain scaling factors to the measurements from the detectors to make them gain-independent. As used herein, the term "gain normalization" may be used to refer to this process. In some implementations, during this process, the measurements from the detectors may be divided by a linear gain associated with a user-selected gain. The linear gain may be determined from the lookup table or the function derived from the above-noted gain calibration process. Advantageously, in some implementations, a gain normalization process will naturally result in gain-independent, unmixed data values in which, for example, the same unmixed MFI will be achieved for a given sample regardless of the gain settings. FIG. 6C illustrates a graph that demonstrates the effect of dividing the measured MFIs of FIG. 6B by a linear gain associated with a user-selected gain. As shown, regardless of which gain is selected by a user, the measured gain-independent MFI is 3 × 10³, which is less than the target MFI of 8 × 10⁴. In other implementations, the measured MFI may be greater than or equal to the target MFI. For simplicity, the data for a single detector is illustrated in FIG. 6C. However, a gain normalization process may be performed for a plurality of detectors in an instrument (*e.g.,* each of a plurality of detectors in a flow cytometer).

Advantageously, a gain normalization process may allow cross-instrument analyses with the same instrument acquisition and data analysis templates. It may also improve downstream intra-platform and longitudinal analyses. For example, in a multicolor flow cytometric experiment requiring spectral unmixing and/or compensation, a gain normalization processes may facilitate the use of single stain control data that may have been acquired across different gain settings and/or daily QC conditions. More specifically, in some implementations, the single stain data may be directly reused for compensation and/or unmixing with the changes in gain settings and/or instrument drift already being accounted for.

To generate meaningful data in standard units (*e.g.,* statistical photoelectrons, receptor abundance, receptor detector, fluorophore abundance, fluorophore density, particle diameter, particle refractive index, or particle surface area), the data normalization method may further include a step for applying one or more assay scaling factors to raw, gain-independent measurements obtained from a gain normalization process (*e.g.,* the gain-independent MFI measurements of FIG. 6C) or to data derived from such measurements. For example, an assay scaling factor may be used to convert the arbitrary detection units of gain-independent measurements to a number of fluorescent molecules that produced the light signal, or it may be used to calculate the number of proteins on a particle by accounting for the number of fluorophores per label to that protein. As used herein, the term "assay normalization" may be used to refer to this process. In some implementations, the gain-independent measurements obtained from a gain normalization process may be in a "raw space" or a "detector space" having a number of dimensions equal to the number of detectors. In some implementations, the data derived from such measurements may be in a "compensated space" or an "unmixed space" having a number of dimensions equal to the number of fluorochromes in the sample. Compensated or unmixed data may be produced through a mathematical process of fluorescence compensation or spectral unmixing (*e.g.,* in full-spectrum cytometers). Methods for spectral unmixing include, for example, weighted-least-squares (WLS)-based spectral unmixing and ordinary-least-squares (OLS)-based spectral unmixing. In some implementations, an assay scaling factor may be provided for each of a plurality of detectors and/or fluorochromes.

In some implementations, a target value may be used to compute an assay scaling factor. In some implementations, the target value may be a target MFI (*e.g.,* the target MFI of 8 × 10⁴ illustrated in FIGS. 6B and 6C). In some such implementations, the corresponding assay scaling factor may be equal to the difference between a measured gain-independent MFI (*e.g.,* the measured gain-independent MFI of 3 × 10³ illustrated in FIG. 6C) and the target MFI. In the context of FIG. 6C, multiplying the gain-independent measurements by such a value would shift the measurements to the target MFI of 8 × 10⁴. In some implementations, the target value may be a number of fluorophores, antibodies, or proteins detected on a particle. For example, if a QC bead has the equivalent of 100,000 fluorescein isothiocyanate (FITC) molecules and if there are approximately 5 measured FITC fluorophores per antibody, the corresponding assay scaling factor may be equal to 20,000 (*i.e.,* 100,000/5). By multiplying a gain-independent measurement by this value, the number of proteins may be detected.

In some implementations, one or more assay scaling factors may be used to compensate for one or more characteristics (*e.g.,* tolerances, such as particle velocity and/or laser intensity) of an instrument (*e.g.,* a flow cytometer). In some such implementations, the one or more assay scaling factors may be used to both convert the arbitrary detection units of gain-independent data (*e.g.,* raw, gain-independent measurements obtained from a gain normalization process or unmixed data derived from such measurements) to more meaningful units (*e.g.,* a number of fluorescent molecules that produced the light signal) and to compensate for one or more characteristics of the instrument. For example, an assay scaling factor may be modified to account for instrument tolerances by incorporating a variable based on measured fluorochrome samples. In some such implementations, the assay scaling factor may account for a drift in sensitivity of the instrument, a fluorophore characteristic of a biological sample, and/or a labelling property of the biological sample.

As noted above, the one or more assay scaling factors may be applied to raw, gain-independent measurements obtained from a gain normalization process or to unmixed data derived from such measurements. Advantageously, the application of the one or more assay scaling factors to unmixed data (as opposed to measurements in a raw space) may facilitate increased performance (*e.g.,* by reducing the required computer resources). For example, in some implementations, the one or more assay scaling factors may be applied on a graph's axis displaying the unmixed data, rather than transforming all of the underlying raw data. Applying the one or more assay scaling factors on unmixed data may reduce the computing resources required on instrument hardware (*e.g.,* an FPGA).

In the implementations described above in relation to FIGS. 6A-6C, the gain normalization process is performed on raw data (*e.g.,* detector measurements in a "raw space" or a "detector space" having a number of dimensions equal to the number of detectors). However, in some implementations, it may be advantageous to preserve gain-dependent scaling of raw data (*e.g.,* due to computational hardware constraints for real-time computation for cell sorting) while implementing gain-independent scaling of unmixed data (*e.g.,* detector measurements in a "compensated space" or an "unmixed space" having a number of dimensions equal to the number of fluorochromes in the sample). To achieve this, a gain normalization process may utilize, for example, the following equation to modify an original spectral matrix *M*⁰ recorded at original gain settings *G*⁰ to unmix measurements from the detectors at new gain settings G: $M \left(G\right) = \left[\begin{matrix}{G}_{1} / {G}_{1}^{0} & & \\ & ⋱ & \\ & & {G}_{m} / {G}_{m}^{0}\end{matrix}\right] \times \left[\begin{matrix}{M}_{1 , 1}^{0} & ⋯ & {M}_{1 , n}^{0} \\ {M}_{2 , 1}^{0} & ⋯ & {M}_{2 , n}^{0} \\ ⋮ & ⋱ & ⋮ \\ {M}_{m , 1}^{0} & ⋯ & {M}_{m , n}^{0}\end{matrix}\right] \times \left[\begin{matrix}{S}_{1} & & \\ & ⋱ & \\ & & {S}_{n}\end{matrix}\right]$ As shown, *M(G)* is a function for deriving an updated spectral matrix *M* based on an original spectral matrix *M*⁰ to be used for unmixing detector measurements at gain *G*.

In Equation 1, the left matrix includes gain scaling factors for each detector. For example, for a detector *m,* the gain scaling factor may be a ratio ${G}_{m} / {G}_{m}^{0}$, where *Gₘ* is the user-selected linear gain for detector *m* and ${G}_{m}^{0}$ is the linear gain originally used when computing *M*⁰ (*e.g.,* when deriving the spectral matrix from single-stained recordings).

The center matrix *M*⁰ of Equation 1 includes the spectral matrix coefficients of the original spectral matrix *M*⁰. For example, for a detector *m,* the measurement ${M}_{m , n}^{0}$ corresponds to the spectral matrix coefficient (also called a "spillover value") for fluorophore *n* in detector *m* when measured at gains *G*⁰. The columns of matrix *M*⁰ may be scaled arbitrarily, but are typically normalized to the maximum value in each column so that the values in each column range from 0 to 1, where each value indicates the signal level for that fluorophore in that detector relative to the signal level for that fluorophore in its maximum-signal detector.

The right matrix of Equation 1 includes rescaling factors for renormalizing each column *n* of the intermediate matrix generated by multiplying the left and center matrices. In some implementations, these rescaling factors ensure that each column has values between 0 and 1. Multiplying the left matrix by the center matrix produces an intermediate matrix containing spectral matrix coefficients rescaled to match the new gain settings. Multiplying that intermediate matrix by the right matrix then rescales those values to normalize the gain-independent spectral matrix coefficients. The new matrix *M(G)* may then be used to generate unmixed data from raw detector data recorded at linear gains G that will have the same scaling (*e.g.,* the same sample measured under both conditions will have the same unmixed MFI for each unmixed parameter) as unmixed data generated with matrix *M*⁰ and raw data acquired at gains *G*⁰.

In some implementations, each rescaling factor in the right matrix of Equation 1 may be determined using the following equation: ${S}_{n} = \frac{1}{max \left({\left(G{\left({G}^{0}\right)}^{- 1}{M}^{0}\right)}_{n}\right)}$ As shown, *Sₙ* is a function for normalizing a column *n* by a gain-scaled, maximum coefficient in that column, where *G* is the diagonal matrix of new linear gains and *G*⁰ is the diagonal matrix of original linear gains. More specifically, when used in Equation 1, Equation 2 divides each spectral matrix coefficient in the intermediate matrix (resulting from multiplication of the left and center matrices in Equation 1) by the maximum value of that coefficient's column in the intermediate matrix.

In some implementations, the matrix *M(G)* of Equation 1 may be multiplied by another matrix that includes assay scaling factors. As discussed above, these assay scaling factors may be used to convert the arbitrary detection units of gain-independent data to more meaningful units (*e.g.,* a number of fluorescent molecules that produced the light signal) and/or to compensate for one or more characteristics (*e.g.,* tolerances, such as particle velocity and/or laser intensity) of an instrument (*e.g.,* a flow cytometer).

In some implementations, it may be advantageous to use gain-dependent measurements (*e.g.,* the original, unmodified data from one or more detectors), unscaled, gain-independent measurements (*e.g.,* obtained through a gain normalization process) and/or the scaled, gain-independent measurements (*e.g.,* obtained through gain and assay normalization processes). For example, in some implementations, gain-dependent measurements may be used to sort one or more particles in a flow stream. Furthermore, in some such implementations, the scaled, gain-independent measurements may be presented to a user (*e.g.,* via a display, such as display device 106). The gain-independent measurements may, for example, make it easier for a user to define one or more thresholds for sorting particles. In some implementations, the gain-independent measurements may enable a user to define more accurate thresholds (*e.g.,* gates) for sorting one or more particles (*e.g.,* cells).

As explained above, a data normalization process may include one or more steps for gain calibration, resolution adjustment, gain normalization (*e*.*g.,* an application or one or more gain scaling factors), and/or assay normalization (*e.g.,* an application or one or more assay scaling factors). Advantageously, in some implementations, this process may be combined with a process for optimizing the gain settings of an instrument (*e.g.,* a flow cytometer). For example, in some implementations, the gain settings of a flow cytometer may be optimized to ensure consistency in sensitivity, resolution, and/or dynamic range. As a result, it may be possible to, for example, simultaneously standardize resolution and MFI across instruments. Over time, this may facilitate the reuse of acquisition templates across platforms. It may also be beneficial in terms of data quality consistency with spectral unmixing.

In some implementations, a data normalization process may be specifically combined with a process for adjusting the gain of the detectors to maximize an SNR for the detectors. Examples of processes for adjusting the gain of one or more detectors to maximize an SNR for the one or more detectors are disclosed in U.S. Publication No. 2023/0296493 A1, which is incorporated herein by reference. For example, the above-noted gain normalization processes may be combined with a gain optimization method that includes irradiating a flow stream with light from a light source, incrementally increasing the gain of one or more detectors configured to collect light from the flow stream, obtaining a baseline noise level from the one or more detectors at each gain, calculating a limit of detection (LoD) for each gain, and assessing the calculated LoDs to determine an optimized gain. However, those skilled in the art will appreciate that the gain may be optimized in a variety of different ways.

As used herein, the term "baseline noise" refers to the baseline electronic signals from a detector (e.g., electronic signals that originate from the operating electronic components of the detector or optical components of the light detection system). In some implementations, baseline noise includes electronic signals present in the light detection system, such as those generated by a light source or other electronic sub-components of the system. In some implementations, the baseline noise includes electronic signals that result from vibrational or thermal effects from components of the system. In some implementations, baseline noise includes optical signals, such as light from an irradiation source in the system (*e.g.,* from one or more lasers present in a flow cytometer). In some implementations, baseline noise arises from a combination of zero-mean electronic thermal noise (*e.g.,* electrical background) as well as photonic shot noise arising from, for example, ambient light and/or elastically scattered light (*e.g.,* optical background). In some implementations, baseline noise is associated with sample fluid characteristics (*e.g.,* the amount of dye in the sample). In some implementations, baseline noise may be determined by calculating the mean-squared error of a detector signal in the absence of particle-based signals or events. In some implementations, obtaining baseline noise includes calculating a moving average mean squared error of a signal generated by a detector.

As discussed herein, the term "LoD" refers to the smallest measurable particle-modulated light signal that can be observed with a sufficient degree of confidence or statistical significance. In some implementations, the LoD represents the smallest measurable particle-modulated light signal corresponding to one standard deviation of noise. In some implementations, LoDs are calculated based on the gain and a baseline noise level. For example, in some implementations, calculating an LoD includes generating a ratio between the gain and the baseline noise level. When baseline noise is a moving average mean squared error, calculating the LoD may include taking the inverse of the ratio between the gain and the baseline noise level. In some implementations, the LoD may be calculated in real time (*e.g.,* by monitoring the fluctuations in baseline at a given gain).

In some implementations, assessing the calculated LoDs includes producing an LoD curve that includes the LoDs calculated for each gain in the plurality of successively increasing gains. In other words, LoDs calculated at each gain are plotted as a function of gain. In some implementations, following the calculation of each individual LoD, that LoD is added as a data point on the LoD curve. In some implementations, the LoD curve may be evaluated for the presence of an inflection point (*e.g.,* a point at which the concavity of the curve changes). In some implementations, the optimized gain may be the gain in the plurality of successively increasing gains that is associated with the LoD at such an inflection point.

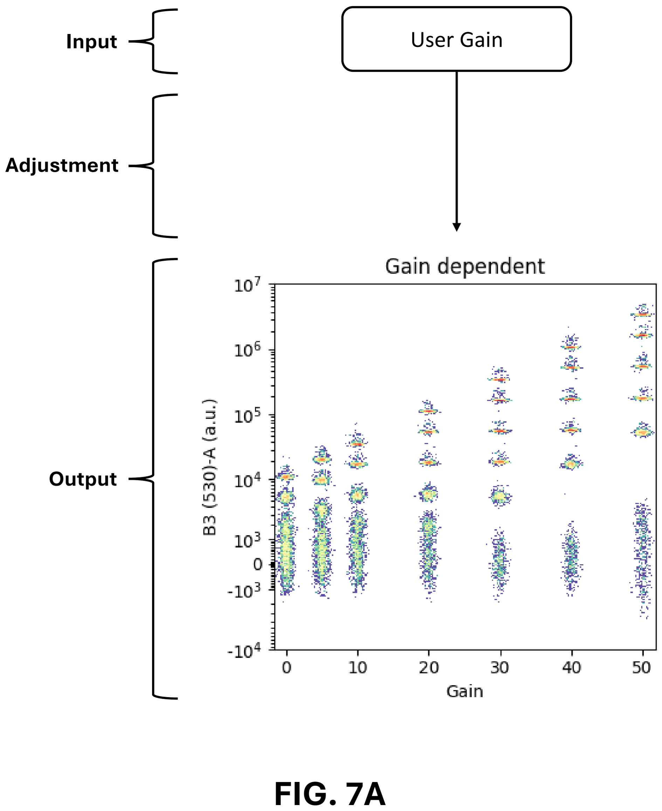

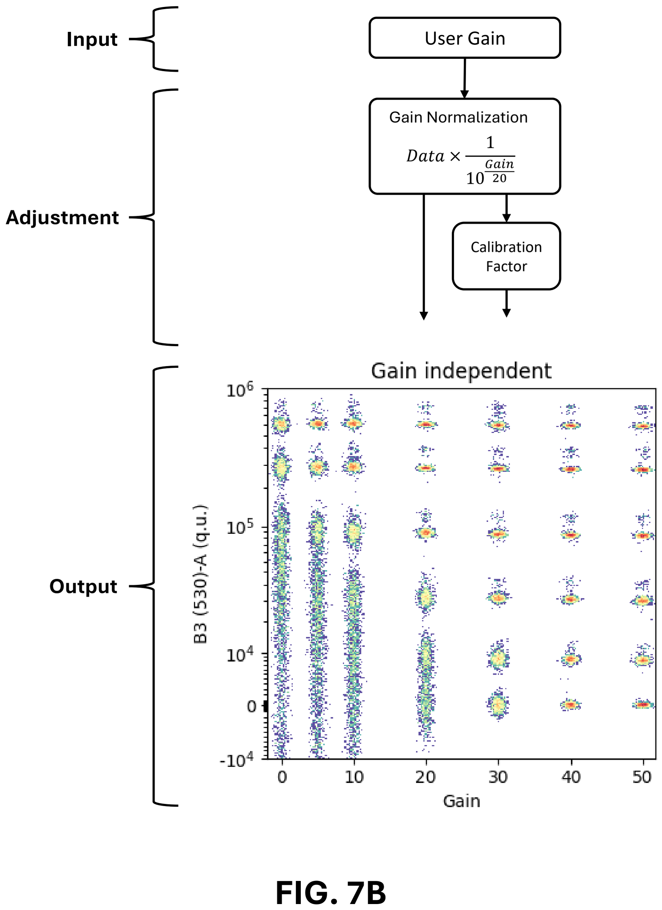

FIG. 7A illustrates the effect of a user changing the gain when analyzing a sample of beads that have six distinct fluorescent intensities using gain-dependent scaling values. FIG. 7B illustrates the effect of a user changing the gain when analyzing a sample of beads that have six distinct fluorescent intensities using gain-independent scaling values. A comparison between FIG. 7A and 7B reveals some notable distinctions. First, in FIG. 7A, while the samples' emission intensities have not changed, their median fluorescence intensity per population is increasing with gain, whereas, in FIG. 7B, the relative MFI of each population is fixed, irrespective of gain. This demonstrates that the MFI data with and between samples from FIG. 7B can be consistent irrespective of detector settings, whereas in FIG. 7A, differences between samples can be due to changes in detector settings. Second, the change in SNR is difficult to quantify by the naked eye in FIG. 7A due to both the spread and the MFI of populations changing, which can make the selection of optimal settings difficult to derive. In FIG. 7B, since the MFI is consistent irrespective of settings, it can clearly be seen by the naked eye where the SNR is optimal.

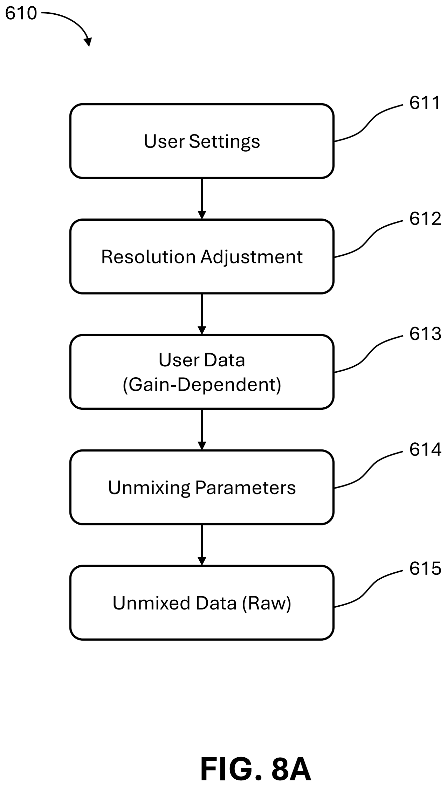

FIG. 8A illustrates a method 610 for operating a flow cytometer. In step 611, one or more user-defined settings of the flow cytometer are adjusted. For example, the gain of one or more detectors may be adjusted to ensure consistency in sensitivity, resolution, and/or dynamic range of the one or more detectors. In step 612, a resolution adjustment process is performed. In step 613, gain-dependent measurements are obtained. In step 614, the gain-dependent measurements are unmixed (*e.g.,* using WLS-based spectral unmixing or OLS-based spectral unmixing). In step 615, raw, unmixed data is obtained. By using a method like method 610, detector settings can be optimized or they can be adjusted to ensure consistent sample MFIs over time, but they cannot be adjusted to achieve both objectives at the same time.

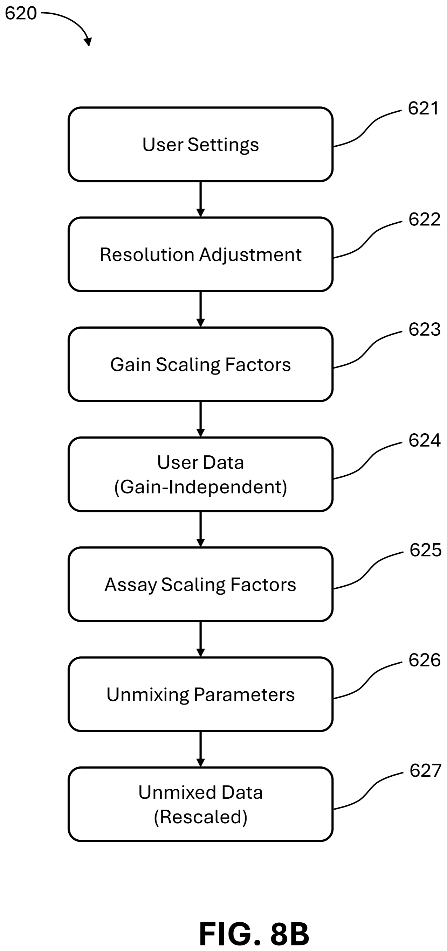

FIG. 8B illustrates a method 620 for operating a flow cytometer that is similar to the method 610 of FIG. 8A. However, method 620 incorporates gain and assay normalization processes. In step 621, one or more user-defined settings of the flow cytometer are adjusted. In step 622, a resolution adjustment process is performed. In step 623, a gain normalization process is performed. In step 624, unscaled, gain-independent measurements are obtained from the gain normalization process. In step 625, an assay normalization process is performed on the unscaled, gain-independent measurements to obtain scaled, gain-independent measurements. In step 626, the scaled, gain-independent measurements are unmixed. In step 627, scaled, unmixed data is obtained. As noted above, a gain normalization process will naturally result in gain-independent, unmixed data values. Therefore, steps 614 and 626 may utilize the same unmixing parameters. Advantageously, by using a method like method 620, detector settings can be optimized and they can be adjusted to ensure consistent sample MFIs over time.

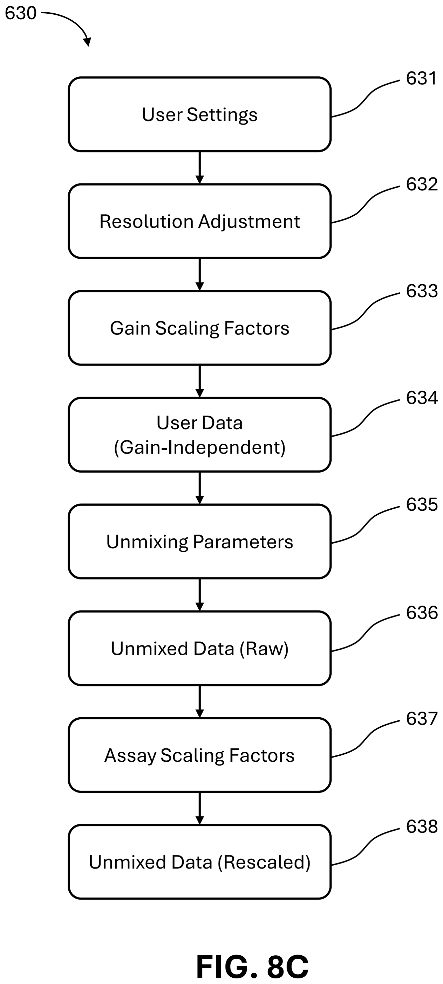

FIG. 8C illustrates a method 630 for operating a flow cytometer that is similar to the method 620 of FIG. 8B. However, method 630 applies the assay scaling factors (*e.g.,* during an assay normalization process) to unmixed data rather than measurements in a raw space. In step 631, one or more user-defined settings of the flow cytometer are adjusted. In step 632, a resolution adjustment process is performed. In step 633, a gain normalization process is performed. In step 634, unscaled, gain-independent measurements are obtained from the gain normalization process. In step 635, the unscaled, gain-independent measurements are unmixed. In step 636, unscaled, unmixed data is obtained (*e.g.,* in arbitrary units). In step 637, an assay normalization process is performed on the unscaled, unmixed data. In step 638, scaled, unmixed data is obtained from the assay normalization process. Advantageously, by using a method like method 630, detector settings can be optimized and they can be adjusted to ensure consistent sample MFIs over time. Furthermore, the application of one or more assay scaling factors to unmixed data (as opposed to measurements in a raw space) may facilitate increased performance (*e.g.,* by reducing the required computer resources). For example, in some implementations, the one or more assay scaling factors may be applied on a graph's axis displaying the unmixed data, rather than transforming all of the underlying raw data.

One or more processors (*e.g.,* the one or more processors included in biological instrument 102, controller 190, detection station 214, detection system 216, processor 240, detection system 304, control system 306, detection station 308, controller/processor 490, processor 550, processor 551, and/or sort trigger 552) may be configured to perform some or all of the steps of methods 610, 620, and/or 630. Furthermore, various modifications can be made to methods 610, 620, and/or 630. For example, in some implementations, one or more of the steps may be removed, combined, and/or modified. For example, in some implementations, steps 611, 621, and/or 631 may be removed from methods 610, 620, and/or 630, respectively. Moreover, in some implementations, one or more steps may be added to methods 610, 620, and/or 630. For example, in some implementations, methods 610, 620, and/or 630 may include a step in which a gain calibration process is performed.

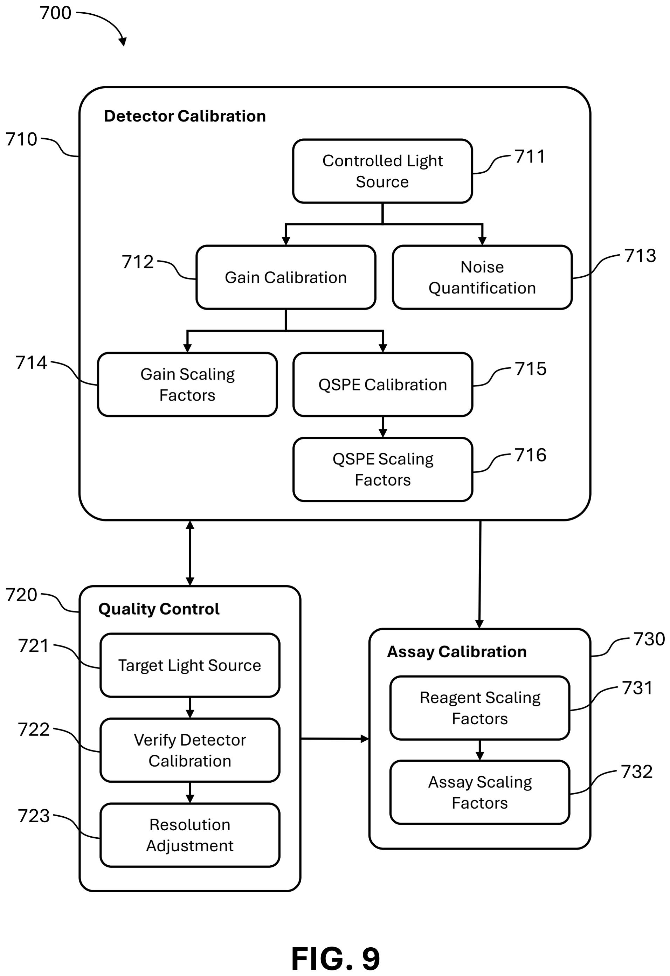

FIG. 9 is a flow diagram 700 for operations of a flow cytometer that utilizes gain-independent measurements. As shown, flow diagram 700 includes detector calibration steps 710, QC steps 720, and assay calibration steps 730. One or more processors (*e.g.,* the one or more processors included in biological instrument 102, controller 190, detection station 214, detection system 216, processor 240, detection system 304, control system 306, detection station 308, controller/processor 490, processor 550, processor 551, and/or sort trigger 552) may be configured to perform some or all of these steps. As shown, the outputs from detector calibration steps 710 may feed into some of QC steps 720. Similarly, outputs from QC steps 720 may feed into some of detector calibration steps 710. For example, if one or more variations in performance (*e.g.,* instrument-to-instrument variations, day-to-day variations, or sample-to-sample variations) measured during QC steps 720 exceed one or more predetermined thresholds, one or more of detector calibration steps 710 may be repeated (*e.g.,* steps 712 and/or 713). Furthermore, outputs from detector calibration steps 710 and QC steps 720 may both feed into some of assay calibration steps 730. For example, raw measurements or unmixed data obtained during detector calibration steps 710 and/or QC steps 720 may be modified by assay calibration steps 730.

Detector calibration steps 710 include a step 711 for controlling a light source, a step 712 for performing a gain calibration process (*e.g.,* as part of a data normalization method), a step 713 for quantifying a noise level (*e.g.,* as part of a gain optimization method), a step 714 for calculating one or more gain scaling factors (*e.g.,* as part of a data normalization method), a step 715 for performing a Q_{SPE} calibration process, and a step 716 for calculating one or more Q_{SPE} scaling factors. As used herein, the term "SPE" refers to statistical photoelectron units. As used herein, the term "Q_{SPE}" refers to the inverse coefficient of linear noise. In some implementations, Q_{SPE} may be used to estimate photon shot noise. In some implementations, during steps 711 and 712, a reference optical source (*e.g.,* an LED pulser) may be controlled and measurements (*e.g.,* generated by one or more detectors) may be obtained at different user-selectable parameters (*e.g.,* detector voltages) to derive a lookup table or a function for associating linear changes (*e.g.,* increases or decreases) in particle MFI with respect to the detector voltage. The resulting lookup table or function makes it possible for a user to adjust the detector gain (rather than voltage), which has a more intuitive impact on data scaling between settings. In some implementations, the gain scaling factors obtained from step 714 and/or the Q_{SPE} scaling factors obtained from step 716 may be applied downstream (*e.g.,* during QC steps 720 and/or assay calibration steps 730) to normalize data. In some implementations, detector calibration steps 710 provide instrument performance metrics, such as characterization of system background noise in calibrated units (*e.g.,* via step 713) and/or the resolution of each detector in calibration units.

QC steps 720 include a step 721 for selecting a target light source, a step 722 for verifying the calibration of one or more detectors, and a step 723 for performing a resolution adjustment process (*e.g.,* as part of a data normalization method). In some implementations, QC steps 720 involve processes for utilizing a target light source (*e.g.,* an LED or a reference material, such as a bead) to verify that system performance is consistent (*e.g.,* by analyzing instrument-to-instrument variations, day-to-day variations, and/or sample-to-sample variations) and/or to verify that scaling factors and/or calibrations are still valid (*e.g.,* with or without running a comprehensive gain calibration procedure). In some implementations, QC steps 720 involve processes for adjusting default system and/or user settings (*e.g.,* to address variations in system performance).

Assay calibration steps 730 include a step 731 for calculating one or more reagent scaling factors and a step 732 for calculating one or more assay scaling factors (*e.g.,* as part of a data normalization method). In some implementations, the one or more reagent scaling factors may be used to compensate for one or more characteristics of a reagent added to a biological sample and/or one or more characteristics of the biological sample itself. The signal from a biological sample stained with a reagent may have multiple components, including the reagent itself, and the intrinsic fluorescence properties of the sample. Cells contain molecules that have their own intrinsic fluorescent properties (as do reagents) that can be accounted for with one or more reagent scaling factors. In some implementations, the one or more assay scaling factors may be used to convert the arbitrary detection units of gain-independent data (*e.g.,* raw, gain-independent measurements obtained from a gain normalization process or unmixed data derived from such measurements) to more meaningful units (*e.g.,* a number of fluorescent molecules that produced the light signal) and/or to compensate for one or more characteristics of the instrument.

Various modifications can be made to flow diagram 700. For example, in some implementations, one or more of the steps may be removed, combined, and/or modified. For example, in some implementations, steps 713, 715, and/or 716 may be removed from detector calibration steps 710. Moreover, in some implementations, one or more steps may be added to flow diagram 700. For example, in some implementations, flow diagram 700 may include one or more steps for applying any of the scaling factors described above to, for example, raw measurements and/or unmixed data.

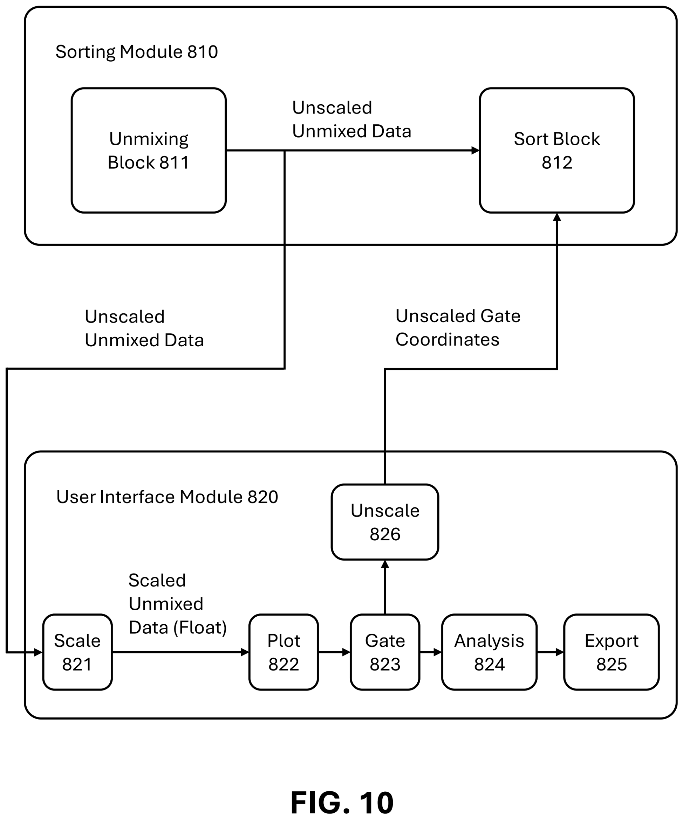

FIG. 10 is a block diagram of a particle analysis and/or sorting system. As shown the system includes a sorting module 810 and a user interface module 820. Modules 810 and 810 may be implemented with one or more processors, one or more ASICs, one or more FPGAs, and/or other similar components. Modules 810 and 810 may also be implemented with a memory medium, such as a hard-drive, memory card, ROM, RAM, DVD, CD-ROM, write-capable, and/or read-only memory, that is capable of storing information. As shown in FIG. 10, a system may utilize both unscaled, gain-dependent measurements (*e.g.,* unscaled, unmixed data) and scaled, gain-independent measurements (*e.g.,* scaled, unmixed data). As shown, sorting module 810 utilizes unscaled, gain-dependent measurements and user interface module 820 utilizes scaled, gain-independent measurements. The gain-independent measurements may, for example, make it easier for a user to define one or more thresholds (*e.g.,* gate coordinates) for sorting one or more particles.

As shown in FIG. 10, sorting module 810 includes an unmixing block 811 that may be configured to receive measurement data from one or more detectors (*e.g.,* the one or more detectors included in detection station 214, detection system 216, detection station 308, fluorescent detectors 460a-460f, and/or photodetectors 511-517) in raw space and unmix the received measurement data (*e.g.,* using WLS-based spectral unmixing or OLS-based spectral unmixing). Sorting module 810 also includes a sort block 812 that is configured receive the unmixed measurement data from unmixing block 811 and gate coordinates from an unscale block 826 of user interface module 820. Sort block 812 may be configured to operate a sorting device (*e.g.,* deflection plates 252, 254, or 531) to sort one or more particles (*e.g.,* cells) in a flow stream based on the unmixed measurement data and the gate coordinates.

User interface module 820 includes a scale block 821, a plot block 822, a gate block 823, an analysis block 824, an export block 825, and unscale block 826. Scale block 821 is configured to receive the unmixed measurement data from unmixing block 811 of sorting module 810 and convert it to scaled, gain-independent measurement data (*e.g.,* using Equations 1 and/or 2). Plot block 822 is configured to generate one or more plots, graphs, and/or other types of visual representations of the scaled, gain-independent measurement data for display to a user (*e.g.,* via a display, such as display device 106). Gate block 823 is configured to render a region of interest as one or more gates around a population of biological event data shown by a display (*e.g.,* overlaid upon a plot generated by plot block 822) and/or receive one or more gates from a user (*e.g.,* via an input device, such as keyboard 108 and/or mouse 110). Analysis block 824 is configured to process the scaled, gain-independent measurement data. These processes may include obtaining statistics of populations within gates (*e.g.,* percentages of populations or subpopulations), median fluorescent intensity changes, standard deviation or coefficient of variation changes, changes in absolute count or count per unit volume, dimensionality reduction methods, or generating new parameters by combining features from multiple recorded parameters. Export block 825 is configure to export the scaled, gain-independent measurement data and/or additional information generated by analysis block 824 to another device. For example, any or all information in module 820 may be transferred or exported from one instrument to another instrument. Unscale block 826 is configured to receive gate values from gate block 823 and convert those values into gain-dependent values that can be used by sort block 812 of sorting module 810 to sort one or more particles of a flow stream.

Various modifications can be made the to the particle analysis and/or sorting system of FIG. 10. For example, in some implementations, one or more of the blocks and/or modules may be removed, combined, or functionally modified. For example, in some implementations, plot block 822 may be modified to display different types of visual representations of the scaled, gain-independent measurement data. As another example, in some implementations, analysis block 824 and/or export block 825 may be removed from the system. As yet another example, in some implementations, sorting module 810 and user interface module 820 may be combined into a single module. Furthermore, in some implementations, one or more modules and/or blocks may be added to the system of FIG. 10. Moreover, in some implementations, scale block 821 may be configured to receive measurement data directly from the one or more detectors instead of, or in addition to, receiving the unmixed measurement data from unmixing block 811. In some such implementations, the mixed measurement data from the one or more detectors may be converted into scaled, gain-independent values by sort block 821.

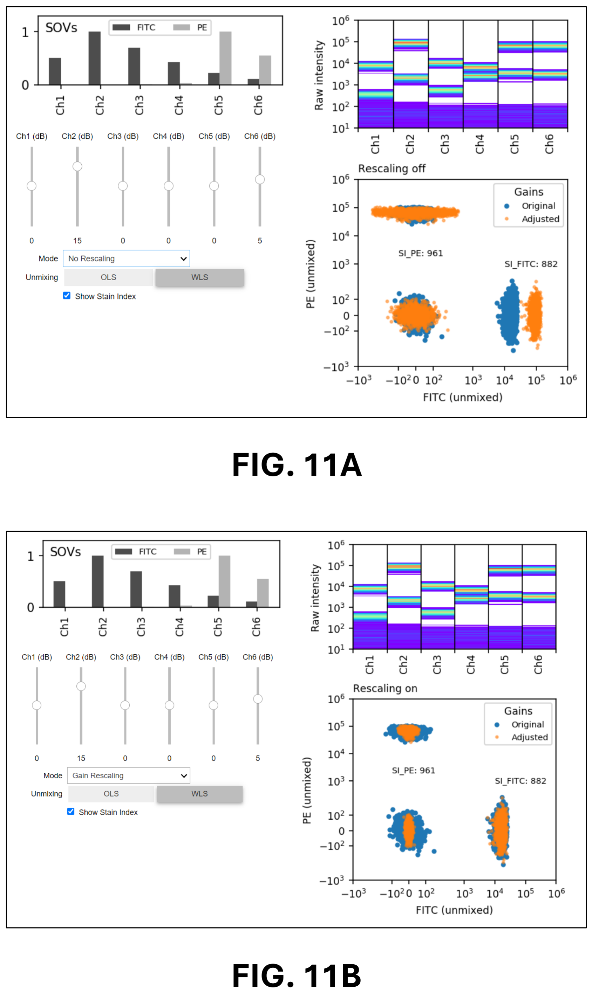

FIG. 11A illustrates a graphical user interface of a flow cytometer with a display mode of "No Rescaling" selected from a drop-down menu. Due to this selection, the values in a plot of unmixed data are provided as gain-dependent values. FIG. 11B illustrates the same graphical user interface shown in FIG. 11A, but with a display mode of "Gain Rescaling" selected from the drop-down menu. Due to this selection, the values in the plot of unmixed data are provided as scaled, gain-independent values (*e.g.,* through gain and/or assay normalization processes). Both plots show the relative intensities of two different dyes (*e.g.,* fluorescein isothiocyanate (FITC) and phycoerythrin (PE)) detected at each of the six different detector channels. As shown, the graphical user interface of FIGS. 11A and 11B also includes buttons for switching between WLS-based spectral unmixing and OLS-based spectral unmixing, a check box for enabling or disabling the display of a stain index (SI), and six sliders for adjusting the gains of six respective detection channels, each of which may correspond to one or more detectors, and a chart of raw measurements.

In some implementations, one or more graphical elements of the graphical user interface of FIGS. 11A and 11B may be changed or removed. For example, the drop-down menu may be changed to a check box for enabling or disabling the conversion of gain-dependent values to scaled, gain-independent values. Similarly, one or more of the sliders may be replaced with a text box for receiving gain values from a user. As another example, the positions of one or more graphical elements may be reversed with one another. For example, the plot may be displayed above the chart, rather than the other way around. As yet another example, the number of sliders may be increased or decreased. For example, depending on the number of detection channels of a corresponding flow cytometer, it may be advantageous to increase or decrease the number of sliders, so that there is a slider for each detection channel.

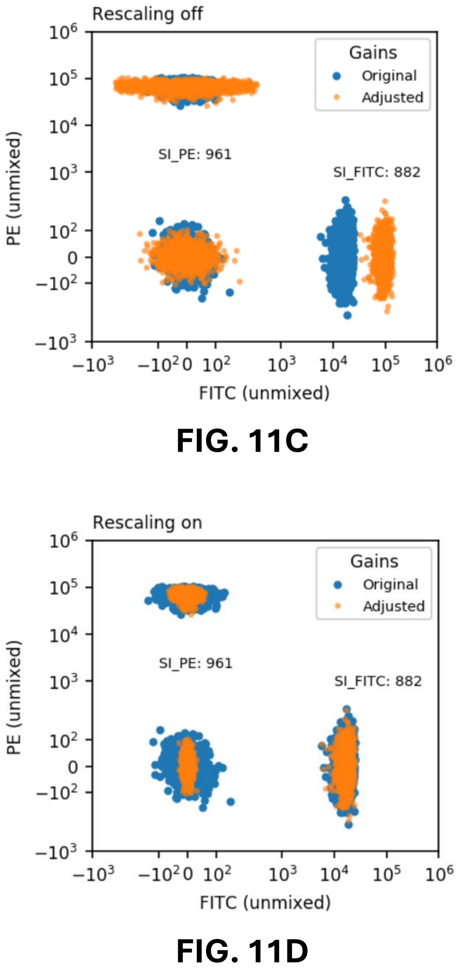

FIG. 11C illustrates the plot of unmixed data shown in the graphical user interface of FIG. 11A. FIG. 11D illustrates the plot of unmixed data shown in the graphical user interface of FIG. 11B. A comparison between these two plots illustrates some of the advantages of using scaled, gain-independent values. As shown, both plots include "Original" data and "Adjusted" data. The "Original" data corresponds to what would be displayed if all of the detector channels were set to some first set of chosen detector gains. The "Adjusted" data corresponds to what would be displayed if the detector channels were set to some modified set of detector gains different from the first set of detector gains. In this example, one detector gain was increased by 15dB, and another was increased by 5dB. In some implementations, only the "Adjusted" data would be displayed. However, for comparison purposes, it is helpful to have both data sets. As can be seen in FIG. 11C, the gain settings cause the displayed values to shift and expand in certain areas, making visual interpretation of signal-to-noise ratio difficult. In contrast, the gain settings do not cause any shift in FIG. 11D when scaled, gain-independent values are used. Instead, the displayed values consistently focus in certain areas of the plot (*e.g.,* cover smaller areas), directly revealing the impact of detector gain settings on signal-to-noise ratio. A stain index metric of signal-to-noise ratio for each unmixed parameter in the adjusted data in both FIG. 11C and FIG. 11D is shown as an overlay on each plot.

From the foregoing and with reference to the various figure drawings, those skilled in the art will appreciate that certain modifications may also be made to the present disclosure without departing from the scope of the same. While several implementations of the disclosure have been shown in the drawings, it is not intended that the disclosure be limited thereto, as it is intended that the disclosure be as broad in scope as the art will allow and that the specification be read likewise. Therefore, the above description should not be construed as limiting, but merely as exemplifications of particular implementations. Those skilled in the art will envision other modifications within the scope and spirit of the claims appended hereto.

## Claims

1. A system comprising:
a detector configured to measure, in a raw space, particle-modulated light emitted by a particle of a flow stream;
a memory storing at least one of:
a lookup table that associates each one of a plurality of user-selectable parameters for adjusting a gain of the detector with a respective one of a plurality of linear gains; or
a predetermined function that associates a provided user-selectable parameter for adjusting the gain of the detector with a corresponding linear gain; and
one or more processors configured to:
receive a raw measurement of the particle-modulated light from the detector;
obtain a user-selected parameter of the plurality of user-selectable parameters for adjusting the gain of the detector;
obtain a linear gain associated with the obtained user-selected parameter by at least one of accessing the lookup table or using the predetermined function; and
convert the raw measurement into a gain-independent value by dividing the raw measurement by the obtained linear gain.

2. The system of claim 1, wherein the memory stores the lookup table, and wherein the linear gain associated with the obtained user-selected parameter is obtained by accessing the lookup table.

3. The system of claim 1, wherein the memory stores the predetermined function, and wherein the linear gain associated with the obtained user-selected parameter is obtained by using the predetermined function.

4. The system of any one of claims 1-3, wherein the one or more processors are further configured to:
apply a scaling factor to the gain-independent value to obtain a scaled, gain-independent value; and
unmix the scaled, gain-independent value to obtain a scaled, unmixed value.

5. The system of any one of claims 1-3, wherein the one or more processors are further configured to:
unmix the gain-independent value to obtain an unmixed value; and
apply a scaling factor to the unmixed value to obtain a scaled, unmixed value.

6. The system of claim 4 or 5, wherein the one or more processors are further configured to obtain a target gain for the detector, and wherein the scaling factor is based on the obtained target gain.

7. The system of any one of claims 4-6, wherein the scaling factor accounts for a drift in sensitivity of the detector over time, a fluorophore characteristic of the particle, or a labelling property of the particle.

8. The system of any one of claims 1-7, wherein the one or more processors are further configured to calculate an optimized gain for the detector.

9. The system of claim 8, wherein a signal-to-noise ratio (SNR) of the detector is optimized by the optimized gain, and wherein the one or more processors are further configured to change the gain of the detector to the optimized gain.

10. The system of any one of claims 1-9, wherein the one or more processors are further configured to:
incrementally increase the gain of the detector such that the detector collects light from the flow stream at each of a plurality of successively increasing gains;
obtain a baseline noise level from the detector at each gain in the plurality of successively increasing gains;
calculate a limit of detection (LoD) for each gain in the plurality of successively increasing gains; and
determine an optimized gain based on the calculated LoDs.

11. The system of any one of claims 1-10, wherein the user-selectable parameters are voltages that when applied to the detector adjust the gain of the detector.

12. The system of any one of claims 1-11, wherein the one or more processors are further configured to sort a plurality of particles based on a threshold defined using the gain-independent value.

13. The system of any one of claims 1-12, wherein the one or more processors are further configured to generate, for display, a graphical user interface comprising a plot with the gain-independent value.

14. The system of claim 13, wherein the graphical user interface further comprises a graphical element for enabling or disabling the conversion of raw measurements received from the detector into gain-independent values.

15. The system of claim 13 or 14, wherein the graphical user interface further comprises a graphical element for adjusting the gain of the detector.

16. A method comprising:
receiving, with one or more processors, from a detector, a raw measurement of particle-modulated light emitted by a particle of a flow stream;
obtaining, with the one or more processors, a user-selected parameter for adjusting a gain of the detector;
obtaining, with the one or more processors, a linear gain associated with the obtained user-selected parameter by accessing a lookup table or using a predetermined function, wherein the lookup table associates each one of a plurality of user-selectable parameters for adjusting the gain of the detector with a respective one of a plurality of linear gains, and wherein the predetermined function associates a provided user-selectable parameter for adjusting the gain of the detector with a corresponding linear gain; and
converting, with the one or more processors, the raw measurement into a gain-independent value by dividing the raw measurement by the obtained linear gain.

17. A non-transitory computer readable storage medium having instructions stored thereon that, when executed by one or more processors, cause the one or more processors to perform the method of claim 16.

18. A method comprising:
obtaining, with one or more processors, an unmixed measurement of particle-modulated light emitted by a particle of a flow stream;
obtaining, with the one or more processors, an original user-selected parameter for adjusting a gain of a detector;
obtaining, with the one or more processors, an updated user-selected parameter for adjusting the gain of the detector;
deriving, with the one or more processors, a scaling factor based on a ratio of the updated user-selected parameter and the original user-selected parameter; and
applying, with the one or more processors, the scaling factor to the unmixed measurement to obtain a gain-independent value.

19. The method of claim 18, further comprising:
applying, with the one or more processors, a rescaling factor to the gain-independent value to obtain a renormalized, gain-independent value.

20. A non-transitory computer readable storage medium having instructions stored thereon that, when executed by one or more processors, cause the one or more processors to perform the method of claim 18 or 19.
